(19) Europäisches Patentamt
European Patent Office
Office européen des brevets

(11) **EP 0 885 055 B1**

(12) **EUROPEAN PATENT SPECIFICATION**

(45) Date of publication and mention
of the grant of the patent:
**04.04.2007 Bulletin 2007/14**

(21) Application number: **97904207.4**

(22) Date of filing: **31.01.1997**

(51) Int Cl.:
*B01D 57/02* (2006.01)    *B03C 5/00* (2006.01)
*C12Q 1/24* (2006.01)    *G01N 27/447* (2006.01)
*B03C 5/02* (2006.01)    *G01N 30/00* (2006.01)

(86) International application number:
**PCT/US1997/001746**

(87) International publication number:
**WO 1997/027933 (07.08.1997 Gazette 1997/34)**

(54) **FRACTIONATION USING DIELECTROPHORESIS AND FIELD FLOW FRACTIONATION**

FRAKTIONIERUNG MITTELS DIELEKTROPHORESIS UND FRAKTIONIERUNG UNTER ANWENDUNG EINES FLUSSFELDES

FRACTIONNEMENT PAR DIELECTROPHORESE ET FRACTIONNEMENT PAR FLUX DE CHAMP

(84) Designated Contracting States:
**AT BE CH DE DK ES FI FR GB GR IE IT LI LU MC NL PT SE**

(30) Priority: **31.01.1996 US 10904 P**
**23.02.1996 US 604779**
**23.02.1996 US 605535**

(43) Date of publication of application:
**23.12.1998 Bulletin 1998/52**

(73) Proprietor: **THE BOARD OF REGENTS, THE UNIVERSITY OF TEXAS SYSTEM**
**Austin, Texas 78701 (US)**

(72) Inventors:
• **BECKER, Frederick, F.**
**Houston, TX 77024 (US)**
• **GASCOYNE, Peter, R., C.**
**Bellaire, TX 77401 (US)**
• **HUANG, Ying**
**Houston, TX 77054 (US)**
• **WANG, Xiao-Bo**
**Houston, TX 77054 (US)**

(74) Representative: **Wallinger, Michael et al**
**Wallinger & Partner,**
**Patentanwälte,**
**Zweibrückenstrasse 2**
**80331 München (DE)**

(56) References cited:
**GB-A- 2 266 153**     **SU-A- 474 723**
**US-A- 4 001 102**     **US-A- 4 326 934**
**US-A- 4 440 638**     **US-A- 5 344 535**
**US-A- 5 454 472**     **US-A- 5 489 506**

• **FUHR G ET AL: "POSITIONING AND MANIPULATION OF CELLS AND MICROPARTICLES USING MINIATURIZED ELECTRIC FIELD TRAPS AND TRAVELLING WAVES" SENSORS AND MATERIALS, vol. 7, no. 2, 1995, pages 131-146, XP000617698**
• **FUHR G ET AL: "TRAVELLING WAVE-DRIVEN MICROFABRICATED ELECTROHYDRODYNAMIC PUMPS FOR LIQUIDS" JOURNAL OF MICROMECHANICS & MICROENGINEERING, vol. 4, no. 4, December 1994, pages 217-226, XP000645701**
• **SEPARATION SCIENCE AND TECNOLOGY, Vol. 21, No. 9, DAVIS et al., "Feasibility Study of Dielectrical Field-Flow Fractionation", pages 969-989.**

**Description**

The present invention relates generally to the fields of molecular separation and particle discrimination. More particularly, it concerns the fractionation of particulate matter utilizing a combination of electrical, hydrodynamic or gravitational forces.

The ability to identify, characterize and purify cell subpopulations is fundamental to numerous biological and medical applications, often forming the starting point for research protocols and the basis for current and emerging clinical protocols. Cell separation has numerous applications in medicine, biotechnology, and research in environmental settings. For example, cell separation can make possible life-saving procedures such as autologous bone marrow transplantation for the remediation of advanced cancers where the removal of cancer-causing metastatic cells from a patient's marrow is necessitated (Fischer, 1993). In other applications, such as the study of signaling between blood cells (Stout, 1993), (Cantrell *et al.,* 1992), highly purified cell subpopulations permit studies that would otherwise be impossible. Current approaches to cell sorting most frequently exploit differences in cell density (Boyum, 1974), specific immunologic targets (Smeland *et al.,* 1992), or receptor-ligand interactions (Chess and Schlossman, 1976) to isolate particular cells.

These techniques are often inadequate and sorting devices capable of identifying and selectively manipulating cells through novel physical properties are therefore desirable. The application of the principles of AC electrokinetics has been used for the dielectric characterization of mammalian cells through the method of electrorotation (ROT) (Arnold and Zimmermann, 1982; Fuhr, 1985; Hölzel and Lamprecht, 1992; Wang *et al.,* 1994) and for cell discrimination and sorting (Hagedorn *et al.,* 1992; Huang *et al.,* 1993; Gascoyne *et al.,* 1992; Gascoyne *et al.,* 1994; Huang *et al.,* 1992). In these techniques, cells become electrically polarized when they are subjected to an AC electric field. If that field is inhomogeneous, then the cells experience a lateral dielectrophoretic (DEP) force, the frequency response of which is a function of their intrinsic electrical properties (Gascoyne *et al.,* 1992). In turn, these properties depend strongly on cell composition and organization, features that reflect cell morphology and phenotype. Cells differing in their electrical polarizabilities can thus experience differential forces in the inhomogeneous electric field (Becker *et al.,* 1994; Becker *et al.,* 1995). Analysis of the dielectrophoretic motion of mammalian cells as a function of applied frequency permits cell membrane biophysical parameters, such as capacitance and surface conductance, to be probed. Because DEP effectively maps biophysical properties into a translational force whose direction and magnitude reflects cellular properties, some degree of separation occurs between particles of different characteristics. While DEP has been used on a microscopic scale to separate bacteria from erythrocytes (Markx *et al.,* 1994), viable from nonviable yeast cells (Wang *et al.,* 1993), and erythroleukemia cells from erythrocytes (Huang *et al.,* 1992), the differences in the electrical polarizabilities of the cell types in those various mixtures were greater than those to be expected in many typical cell sorting applications.

Field flow fractionation (FFF) has also been generally employed for separation of matter, utilizing particle density, size, volume, diffusivity, thickness, and surface charge as parameters (Giddings, 1993). The technique can be used to separate many different types of matter, from a size of about 1 run to more than about 100 micrometers which may include, for example, biological and non-biological matter. Separation according to field flow fractionation occurs by differential retention in a stream of liquid flowing through a thin channel. The FFF technique combines elements of chromatography, electrophoresis, and ultracentrifugation, and generally FFF requires the presence of a field or gradient to develop a differential flow. This differential flow creates a flow profile which may be, for example, linear or parabolic. A field is then applied at right angles to the flow and serves to drive the matter into different displacements within the flow profile which travel at differing velocities. Fields may be based on sedimentation, crossflow, temperature gradient, centrifugal forces, and the like. The technique suffers, however, from producing insufficiently pure cell populations, being too slow, or being too limited in the spectrum of target cells or other matter.

The UK patent application GB 2 266 153 A discloses an apparatus for separating a mixture of particles by dielectrophoresis comprising a chamber with an inlet and an outlet. An electrode structure with at least two electrodes is provided in the chamber as well as means for applying alternating voltage between the electrodes. The electrode structure is energized such that a non-uniform alternating electric field is established in the eluant flow, whereby particles passing vertically in the chamber are separated into fractions.

The United States patent US 5,344,535 discloses an apparatus for establishing dielectrophoretic collection rates for particles in a fluid suspension. An electrode system comprising closely spaced electrodes is provided for influencing the fluid suspension within a chamber. A spatially non-uniform alternating electric field is established in the immediate vicinity of the electrodes, so as to induce dielectrophoretic collection adjacent to the electrodes. Further, means are provided for measuring the particle concentration within the chamber.

In view of the prior art, there exists a need for highly discriminate separation of particulate matter, especially biological matter, that operates without physically modifying the structure of the matter to be separated. Moreover, such an approach should allow for the sensitive manipulation of such particles, which may include characterization and purification of desired matter from extraneous or undesired matter.

The present invention seeks to overcome the drawbacks inherent in the prior art by combining the use of frequency-dependent electric and conductive properties of particles with the properties of the suspending and transporting medium. As used herein, the term "matter" is intended to include particulate matter, solubilized matter, or any combination thereof.

According to the present invention, an apparatus for separation of particulate matter is provided as defined in claim 1. Embodiments of the apparatus are provided as defined in claims 2 to 17. Furthermore, a method of separating particulate matter is provided according to the present invention as defined in claim 18. Embodiments of the method are given in claims 19 to 30.

The method and apparatus provide for the discrimination of particulate matter and solubilized matter of different types. This discrimination may include, for example, separation, characterization, differentiation and manipulation of the particulate matter. The particulate matter may be placed in liquid suspension before input into the apparatus. The discrimination occurs in the apparatus, which may be a thin, enclosed chamber. Particles may be distinguished, for example, by differences in their density, size, dielectric permittivity, electrical conductivity, surface charge, and/or surface configuration.

The method may be used to discriminate particulate matter, including inorganic matter, such as minerals, crystals, colloidal, conductive, semiconductive or insulating particles and gas bubbles. The method of the present invention may also be used to discriminate biological matter, such as cells, cell organelles, cell aggregates, nucleic acids, bacterium, protozoans, or viruses. Further, the particulate matter may be, for example, a mixture of cell types, such as fetal nucleated red blood cells in a mixture of maternal blood, cancer cells such as breast cancer cells in a mixture with normal cells, or red blood cells infested with malarial parasites. Additionally, the method may be used to discriminate solubilized matter such as a molecule, or molecular aggregate, for example, proteins, or nucleic acids.

Particle size to be discriminated may be any size. However, the method is generally practical for particles between ~10 nm and ~1mm, and may include, for example, chemical or biological molecules (including proteins, DNA and RNA), assemblages of molecules, viruses, plasmids, bacteria, cells or cell aggregates, protozoans, embryos or other small organisms, as well as non-biological molecules, assemblages thereof, minerals, crystals, colloidal, conductive, semiconductive or insulating particles and gas bubbles. For biological applications using living cells, the present invention allows cells to be separated without the need to alter them with ligands, stains, antibodies or other means. Cells remain undamaged, unaltered and viable during and following separation. Non-biological applications similarly require no such alteration. It is recognized however, that the apparatus and method according to the present invention are equally suitable for separating such biological matter even if they have been so altered.

The apparatus includes an elongate chamber. The chamber has at least one inlet and one outlet port, an interior surface and an exterior surface. The chamber is designed to have structural characteristics which cause a fluid or gas travelling through the chamber to travel at differing velocities according to a velocity profile. The chamber may be rectangular in shape and may include, for example, a top wall, bottom wall and two side walls. In certain embodiments, the chamber may be constructed so that the top wall and bottom wall are of a much greater magnitude than the side walls, thereby creating a thin chamber capable of creating a velocity profile. In other embodiments, the chamber may be constructed so that the top wall and bottom wall are of a much smaller magnitude than the side walls, again creating a thin chamber capable of creating a velocity profile. Alternately, the chamber may be of circular construction, triangular, rectangular, hexadecagonal, or of other geometrical shapes. As such, the chamber is not intended to be limited to a particular geometric shape. The chamber may be constructed of many different materials, for example, glass, polymeric material, plastics, quartz, coated metal, or the like.

The chamber includes a plurality of electrode elements adapted along a portion or all of the chamber. The electrode elements may be electrically connected to an electrical conductor. In the discussion which follows, the terms "electrode element" or "electrodes" will be used. As used herein, "electrode element" is a structure of highly electrically-conductivematerial over which an applied electrical signal voltage is constant. It is to be understood that these terms include all of the below described electrode configurations. An electrical signal generator, which may be capable of varying voltage, frequency, phase or any combination thereof may provide at least one electrical signal to the electrode elements. The electrode elements of the present invention include a plurality of electrode elements which may be connected to a plurality of electrical conductors, which in turn are connected to the electric signal generator.

The chamber includes a plurality of electrode elements which comprise an electrode array. As used herein, an "electrode array" is a collection of more than one electrode element in which each individual element may be displaced in a well-defined geometrical relationship with respect to one another. This array may be, for example, a parallel array, interdigitated castellated array, a polynomial array, plane electrode, or the like. Further, the array may be comprised of microelectrodes of a given size and shape, such as an interdigitated array. The electrode array may be adapted along any interior or exterior surface of the chamber. Alternately, it is envisioned that the electrode array may be incorporated into the material which comprises the chamber walls. In certain embodiments, the electrode array may be a multilayer array in which conducting layers may be interspersed between insulating layers. Fabrication of such an electrode array is known in the art, and is similar to the fabrication of multilayer circuit boards. Further, the present invention may have a plurality of electrode arrays which may be adapted, for example, on opposing surfaces of the chamber. However, it may be possible to place the plurality of electrode arrays on adjacent surfaces or on all surfaces of the chamber.

The electrode elements may be adapted to be substantially longitudinally or latitudinally along a portion of the chamber. Other configurations of electrode elements are contemplated, such as electrode elements adapted at angles to the chamber. It is also possible to use a three-dimensional electrode element that may or may not be attached to the surface of the chamber. For example, electrode elements may be fabricated from silicon wafers, as is known in the art. If the electrodes are adapted along the exterior surface of the chamber, it is envisioned that a means of transmitting energy into the chamber, such as a microwave transmitter may be present. The electrode elements may be configured to be on a plane substantially normal or parallel to a flow of fluid travelling through said chamber; however, it is to be understood that the electrode elements may be configured at many different planes and angles.

When the electrode elements are energized by at least one electrical signal from the electrical signal generator, the electrode elements thereby create a spatially inhomogeneous alternating electric field, which causes a DEP force on the particulate matter and solubilized matter having components normal to the fluid travelling through the chamber. This DEP force may be a conventional DEP force (cDEP), which may act in different directions with respect to the fluid, depending on the configuration of the electrode elements or it may be another DEP force acting such as travelling wave DEP (twDEP). The cDEP force typically acts in a direction substantially normal to the electrode element plane, that is, the cDEP force typically forces matter towards or away from this plane. In certain embodiments, the DEP force may act solely in a direction normal to the fluid. As used herein, "a direction normal to the fluid" means in a direction which is substantially non-opposing and substantially nonlinear to the flow of a fluid traveling through the chamber. This direction may be for example, vertically, sideways, or in another non-opposing direction. By effect of this DEP force, the particulate matter and solubilized matter may be displaced to positions within the fluid. This displacement may be relative to the electrode elements, or may relate to other references, such as the chamber walls.

It is noted that by altering phase of the alternating electrical signal, a second DEP force, known as traveling wave DEP (twDEP), is created. The cDEP force is dependent on the spatial inhomogeneity of the electric field and causes matter to move towards or away from regions of high electrical field strength. The twDEP force is dependent upon the phase distribution of the applied electric field, and causes matter to move towards or away from the direction of increasing phase values.

The ratio of electrode element width to electrode element spacing may be modified to change the particulate matter and solubilized matter levitation height. That is, as used herein, "levitate" or "levitation height" means that matter is displaced at different levels with respect to the electrode elements, in any direction, because of this different electric field. Specifically, by changing this ratio, the electric field which is created is thereby altered. When the electric field is thereby altered, in magnitude and/or inhomogeneity, the levitation height of the matter similarly change. This levitation need not be in a vertical direction, and may include displacement in a horizontal direction, for example.

In the present invention, the cDEP force is dependent on the magnitude of the spatial inhomogeneity of the electric field and the in-phase (real) part of the electrical polarization induced in matter by the field. It is to be understood that the term "electrical polarization" is related to the well-known Clausius-Mossotti factor, described below. This field-induced electrical polarization is dependent on the differences between the dielectric properties between the matter and the suspending medium. These dielectric properties include dielectric permittivity and electrical conductivity. Together, these two properties are known as complex permittivity. The cDEP force causes the matter to move towards or away from regions of high electrical field strength, which in an exemplary embodiment, may be towards or away from the electrode plane.

The equation for the time-averaged conventional dielectrophoretic force in an electric field strength having an rms value of $E_{rms}$ is:

$$F(t) = 2\pi\varepsilon_m r^3 \operatorname{Re}\left[f_{cm}\right]\nabla E_{rms}^2 \qquad (1)$$

where the factor $f_{cm}$ is the well-known Clausius-Mossotti factor defined as

$f_{cm}\left(\varepsilon_p^*, \varepsilon_m^*\right) = \left(\varepsilon_p^* - \varepsilon_m^*\right) / \left(\varepsilon_p^* + 2\varepsilon_m^*\right)$, and where $\varepsilon_p^*$ and $\varepsilon_m^*$ are the complex permittivities of the matter and its suspending medium, respectively. The Clausius-Mossotti factor may also include other terms to account for other forms of electrical polarization or conductivity induced or modified by the applied field, for example, the surface charge of the matter. In the force equation, r is the radius of the matter desired to be discriminated, $\operatorname{Re}[f_{cm}]$

is the real part (in-phase component) of the factor $f_{cm}$, and $\nabla E_{rms}^2$ is the magnitude non-uniformity factor of the applied electric field. As seen from equation (1), if the in-phase part of the Clausius-Mossotti factor is greater than zero, then the matter tends to move towards the strong field. If the in-phase part of the Clausius-Mossotti factor is less than zero, the matter tends to move towards the weak field.

In an alternate embodiment of the present invention, the electrode array may include at least three sets of electrode elements. As used herein, "set" is a group of individual electrode elements having a defined geometric relationship to each other. Such a defined geometrical relationship may include, for example, a triangle, circle, square, or complex shapes such as conic sections, and the like. It is to be understood that sets of electrode elements may be designed based on principles of electromagnetic theory. At least one applied electrical signal having different phases may be applied to the at least three sets of electrode elements. For example, one applied signal may be adequately delayed by a capacitor or other time delay circuitry to provide each of the at least three sets of electrode elements a signal having a different phase. Alternatively, different signals having different phase relationships may be provided to the electrode elements. These signals thus create an electric field distribution that may be spatially inhomogeneous with respect to magnitude, and may travel through space by virtue of the phase distribution.

It is noted that by applying at least one electrical signal having different phases to the at least three sets of electrode elements, a traveling wave dielectrophoretic (twDEP) force is created in addition to the cDEP force. The twDEP force is dependent upon the phase distribution of the applied electric field (reflecting its movement through space, which is in the direction of small phase regions), and the out-of-phase (imaginary) part of the electrical polarization induced in the matter by the field. The twDEP force causes the matter to move towards or away from the direction of increasing phase values. The twDEP force typically acts in a direction substantially parallel to the electrode element plane. In the case of twDEP, the equation for the time-averaged travelling wave dielectrophoretic force is:

$$F(t) = 2\pi\varepsilon_m r^3 \operatorname{Im}(f_{cm})\left(E_{x0}^2\nabla\Phi_x + E_{y0}^2\nabla\Phi_y + E_{z0}^2\nabla\Phi_z\right) \qquad (2)$$

where $\operatorname{Im}(f_{cm})$ is the imaginary part (out-of-phase component) of the factor $f_{cm}$ and $E^2\nabla\Phi$ is the phase non-uniformity factor (where $E_{X0}$, $E_{Y0}$ and $E_{Z0}$ are the magnitudes of each electric field component in the Cartesian co-ordinate frame, and $\Phi_x$, $\Phi_y$ and $\Phi_z$ are the phases of each field component). As seen from Equation (2), if the out-of-phase part of the Clausius-Mossotti factor is greater than zero, the force directs matter towards regions where the phases of the field components are larger. If the out-of-phase part of the Clausius-Mossotti factor is less than zero, the force directs matter towards regions where the phases of the field components are smaller.

The combination of the cDEP and twDEP forces may be referred herein as generalized dielectrophoresis (gDEP). The combination of equations (1) and (2) therefore results in the equation for the time-averaged generalized dielectrophoretic force:

$$F(t) = 2\pi\varepsilon_m r^3\left(\operatorname{Re}[f_{cm}]\nabla E_{rms}^2 + \operatorname{Im}(f_{cm})\left(E_{x0}^2\nabla\Phi_x + E_{y0}^2\nabla\Phi_y + E_{z0}^2\nabla\Phi_z\right)\right) \qquad (3)$$

Thus, matter under the influence of one or both of these forces may be displaced to different positions within the fluid flowing in the chamber. It is noted that the cDEP force may be approximately four times greater than the twDEP force caused by the same electrical field strength. It is to be understood that cDEP and twDEP are principal components of gDEP, and other gDEP forces such as a combination of cDEP and twDEP, may also act on matter in an apparatus according to the present invention.

In an embodiment of the present invention which utilizes twDEP forces in addition to cDEP forces, matter may be displaced in two-dimensions (time and horizontal). As discussed above, the cDEP force combined with field flow fractionation causes the matter to be displaced to different positions within the fluid flow. In addition, in an embodiment in which the electrode elements are configured substantially parallel to the fluid flow through the chamber, the twDEP force on matter acts substantially parallel to the plane of the electrode elements, and substantially transverse to the fluid flow. Therefore, matter is deflected laterally across the chamber from the original narrow flow stream in which it entered the chamber. The direction and magnitude of this deflection is a measure of the imaginary part of the dielectric properties of the matter, namely the electrical polarization induced in the matter by the field. The deflected matter therefore travels through the chamber and exits at positions that are laterally displaced from the port through which it entered.

Thus, the combined influence of the cDEP and twDEP forces results in a time and horizontal displacement of matter. Each component of the displacement represents different characteristics of the introduced matter, and matter having different characteristics may experience different components of force in each direction. Therefore, matter discrimination may be achieved according to the time of travel through the chamber depending on the in-phase (real) part of the polarization of the matter, its density, surface configuration, volume, and the dielectric properties of the fluid. Matter discrimination according to the lateral displacement of the matter from its inlet position depends on its volume and the out-of-phase (imaginary) part of its electrical polarization, and the dielectric properties of the fluid. The outlet port may be constructed so that matter having different lateral positions at one displacement level may be separately discriminated. For example, it may be possible to utilize a laser as a tool to determine characteristics of matter exiting at selected lateral positions.

Common electrical conductors may be used to connect the one or more sets of electrode elements to the signal generator. The common electrical conductors may be fabricated by the same process as the electrodes, or may be one or more conducting assemblies, such as a ribbon conductor, metallized ribbon or metallized plastic. A microwave assembly may also be used to transmit signals to the electrode elements from the signal generator. All of the electrode elements may be connected so as to receive the same signal from the generator. It is envisioned that such a configuration may require presence of a ground plane. More typically, alternating electrodes along an array may be connected so as to receive different signals from the generator. The electrical generator may be capable of generating signals of varying voltage, frequency and phase and may be, for example, a function generator, such as a Hewlett Packard generator Model No. 8116A. Signals desired for the methods of the present invention are in the range of about 0 to about 15 volts, and about 0.1 kHz to about 180 MHz, and more preferably between about 0 to about 5 volts, and about 10 kHz to 10 MHz. These frequencies are exemplary only, as the frequency required for matter discrimination is dependent upon the conductivity of for example, the cell suspension medium. Further, the desired frequency is dependent upon the characteristics of the matter to be discriminated. The discrimination obtained depends on the shape, size and configuration of the electrode elements, for example. In an exemplary embodiment, the signals are sinusoidal, however it is possible to use signals of any periodic or aperiodic waveform. The electrical signals may be developed in one or more electrical signal generators which may be capable of varying voltage, frequency and phase.

A chamber has at least one inlet and outlet port. The outlet port may be arranged to be vertically lower than the at least one inlet port. Such an arrangement thereby permits sedimentation of the particulate matter and solubilized matter as it travels throughout the chamber. In addition to the at least one inlet port and one outlet port, the chamber may also include one or more input ducts which allow the fluid to flow through the apparatus.

The outlet port of the chamber may take many forms. Specifically, the outlet port may be a single port, or a plurality of ports, or an array of ports. The outlet port, for example, may be located along the entire width or a part of the width of the chamber. The outlet port may be adapted to receive matter of various shapes and sizes. For example, the size of the outlet port may vary from approximately twice the size of the matter desired to be discriminated to the entire width of the chamber. In one embodiment, the outlet port may be constructed of one or more tubing elements, such as TEFLON tubing. The tubing elements may be combined to provide an outlet port having a cross section comprised of individual tubing elements. Further, for example, the outlet port may be connected to fraction collectors or collection wells which are used to collect separated matter. As used herein, "fraction collectors" and "collection wells" include storage and collection devices for discretely retaining the discriminated particulate matter and solubilized matter. Other components that may be included in the apparatus of the present invention are, for example, measurement or diagnostic equipment, such as cytometers, lasers, particle counters and spectrometers.

After being displaced within the fluid travelling through the chamber of the present invention, the displaced matter may exit from the outlet port or ports at a time proportionate to the displacement of the matter within the fluid. Specifically, matter at different levels of displacement within the fluid travels at different speeds. Therefore, the displaced matter is discriminated by its displacement within the fluid flow. The position of the particulate matter and solubilized matter within the fluid causes the matter to travel through the chamber at velocities according to the velocity profile of the chamber.

This velocity profile may be, for example, a hydrodynamic fluid profile such as a parabolic flow profile. The velocity profile may be determined by knowing the flow rate of the fluid, and the chamber width and thickness. The average velocity profile may then be calculated according to the equation:

$$\text{velocity profile} = (\text{flow rate})/(\text{chamber width} \times \text{chamber thickness}). \quad (4)$$

Parameters that determine the velocity profile of the fluid flow include (but are not limited to): the chamber width or thickness, which in a rectangular embodiment may be the distance between opposing walls; constrictions or expansions of the fluid flow path which may include, for example, those arising for a non-parallel disposition of opposing chamber walls, or from the presence of suitably-placed obstructions or vanes; surface periodic or aperiodic modifications of the thickness of the fluid stream, including the electrode elements and other surface structural configurations, and the geometrical form of the chamber which may be, for example, rectangular, circular, wedge-shaped, stepped, or the like.

In another embodiment of the apparatus, a chamber may have two facing electrode arrays adapted on opposing surfaces. The chamber may be oriented so that the electrode planes stand substantially vertical and the thin sides of the chamber are vertically arranged. It is understood, however, that the electrode planes need not be only vertical, and the present invention contemplates adapting the apparatus at varying angles. Different electrical signals (frequency and magnitude) may be applied to the facing electrodes from the signal generator so that particles experience different cDEP forces. Further, within each electrode array, each alternate element may receive different electrical signals to create an inhomogeneous alternating electric field.

This further embodiment may have, for example, one inlet port adapted to receive the particulate matter to be discriminated. The inlet port may be located, for example, close to the top of one end of the chamber. This apparatus may also include one or more ducts to introduce a fluid that travels through the chamber. The ducts, which may be arranged substantially along the entire width of the input end of the chamber, serve to introduce a sheet of fluid that travels throughout the chamber in a substantially linear direction. As used herein, a "sheet" of fluid may be a flow of fluid or gas entering the chamber at a substantially uniform flow rate. The introduced fluid carries the particulate matter through the chamber. Following transit through the chamber, fluid leaves at the opposite end. This exit end of the chamber may include, for example, one or more exit ports, which may be arranged in one or more arrays of exit ports.

Different electrical signals (frequency or magnitude or both) are applied to electrode elements located on each of the side walls. There is a synergistic interaction between these different electrical signals which creates an inhomogeneous electric field. Different matter equilibrates at different characteristic distances from the side walls of the chamber based on this synergistic interaction of the differing electrical signals, herein an "equilibrium position." The equilibrium position is therefore caused by cDEP forces on the particles. Additionally, twDEP forces may impact this equilibrium position. This equilibration position depends on the dielectric and conductive properties of the matter, the magnitude and frequency of the electrical fields applied to the electrodes on the opposing chamber walls, fluid density, viscosity, and flow rate. The equilibrium position of matter depends on the synergism of the different electrical signals acting within the chamber to levitate the matter. The velocity of the different matter within the fluid is controlled by the velocity profile of the fluid. This velocity profile has a maximum rate towards the center of the chamber, with this rate proportionately diminishing as distance from the side walls decreases. Because of this velocity profile, matter that has equilibrated at different equilibrium distances from the chamber walls will be carried at different velocities and therefore take varying amounts of time to traverse the chamber.

The distance that matter sediments during its passage across the chamber will depend upon its transit time, as gravitational forces act on the matter during its transit through the chamber, and is known as a "sedimentationeffect." Consequently, different particles will sediment to different depths based upon the transit time of matter through the chamber. Particle sedimentation also depends on matter characteristics, such as size, mass, and volume, for example. Therefore, the time required for particles to travel across the entire length of the chamber is controlled by the fluid flow profile. The placement of particles within the fluid flow profile is in turn determined by the synergism of the differing electrical signals. Particles with different characteristics may exit the chamber through different outlet ports which may be placed at different heights with respect to the inlet ports. Discrimination may be accomplished either in "batch mode" or in "continuous mode." In batch mode, an aliquot of particles is injected and collected with respect to the time of transit for the particles and the height of exit at the outlet ports. In continuous mode, a constant stream of particles is injected into the inlet port, and matter emerging at different heights are continuously collected.

A further embodiment of the chamber having two facing electrode arrays adapted on opposing surfaces is also possible. In this design, the electrode arrays are arranged along the opposing surfaces so that the individual electrode elements are substantially parallel to the direction of fluid flow. However, it may be possible to create the desired DEP forces by electrodes perpendicular or in other directions to the flow of fluid. Different electrical signals (frequency, magnitude, phase, or a combination thereof) may be applied to the facing electrodes from the signal generator so that particles experience different cDEP and/or twDEP forces. The cDEP forces may act to displace matter to or away from the electrode plane, based on the magnitude of the field inhomogeneity. The twDEP forces may act in a plane substantially parallel to the electrode arrays, based on the phase inhomogeneity of the field produced by the electrode arrays.

The cDEP forces in combination with field flow fractionation cause matter to be displaced characteristic distances with respect to the electrode arrays. This characteristic distance is a function of the matter's dielectric and conductive properties, the magnitude and frequency of the electrical fields applied to the electrodes on the facing chamber walls, and the fluid density, viscosity and flow rate. Matter therefore equilibrates at an equilibrium position with respect to the electrode arrays dependent on these characteristics. Because of the velocity profile set up in the chamber, matter at different equilibrium positions travels at different velocities and therefore takes different amounts of time to travel through the chamber.

In a further embodiment, the electrode arrays may be arranged on opposing vertical walls of the chamber. In this embodiment, the electrode arrays may be arranged at right angles to the flow of fluid through the chamber. In addition to displacement caused by the DEP forces, matter also sediments as it travels through the chamber and the distance that the matter sediments depends upon the time required to traverse the chamber and the sedimentation rate of the matter. The distance of matter sedimentation is also affected by the twDEP force. Specifically, the twDEP force acts in a substantially vertical direction when the electrode arrays are located on the side walls of the chamber. Therefore the twDEP force component adds to or opposes the sedimentation forces acting on the matter. Thus the net vertical displacement which the matter experiences as it traverses the chamber is modified.

Matter discrimination in this embodiment may be accomplished in a continuous mode, whereby a constant stream of matter is injected into the at least one inlet port, and matter emerging at differing vertical displacements is continuously collected at the outlet ports. Alternately, it may be possible to operate this embodiment in a "pulse" mode. In pulse mode, a batch of matter may be injected into the at least one inlet chamber and electrical signals are applied for a defined amount of time. Then the signals are turned off, and the matter is allowed pass through the chamber under the influence of the fluid flow and be collected at the at least one outlet port. Then, another batch may be injected for similar processing.

To further achieve the benefits of discrimination, the carrier fluid characteristics at different vertical displacements may be varied by modifying for example, flow rate, fluid density, viscosity, dielectric permittivity, pH and conductivity of the carrier fluid. In this way, additional matter characteristics may be exploited for particular discrimination applications.

The method and apparatus of the present invention introduce the use of the frequency-dependent dielectric and conductive properties of particles as well as those of the suspending medium. These criteria for particle fractionation allow sensitive manipulation of particles because the dielectrophoretic force is large and strongly dependent on particle properties. Appropriate choices of the suspending medium and applied field conditions allow for high levels of discrimination.

Previously reported field flow fractionation techniques have limitations for biological samples because of the narrow range of particle densities, demanding complex centrifuges and centrifugation techniques for good discrimination. The cDEP affinity method demands large differences in the dielectric characteristics of the particles to be separated so that selected particulate matter and solubilized matter can be completely immobilized while others are swept away by fluid flow forces. Since, for biological cells, damage can occur at high electric field strengths, there is a practical limitation to the maximum cDEP force that can be applied and this in turn limits the maximum fluid flow rate in the cDEP affinity approach. This may result in a slow cell sorting rate. In the methods of the present invention, these limitations are substantially reduced. Furthermore, the cDEP affinity method of the prior art utilizes the dielectrophoretic force component that generally immobilizes particles on electrode elements.

Also, the flow profile is an active mechanism for the separation and discrimination of particles, and the dielectrophoretic force (mainly the force component in the direction normal to the fluid flow profile) is the primary means by which the height of particles in the fluid stream is controlled. As discussed above, the fluid profile may be controlled by apparatus design, fluid velocity, density and the like. By combining FFF and dielectrophoretic forces, the present invention takes advantage of particle volume and density in synergism with the frequency-dependent particle dielectric and conductive properties as well as surface configuration. The operation of an apparatus according to the present invention may be controlled by varying experimental conditions including, but not limited to, the particle suspending medium conductivity and permittivity, the fluid flow rate, viscosity and density, the applied electrical field strength and the applied frequency. This utilization of many parameters in setting the operational conditions for fractionation greatly increases the ability to discriminate between different particulate matter and solubilized matter. In the methods according to the present invention, particles emerging from the outlet ports of the apparatus may be collected, for example, by one or more fraction collectors. Furthermore, when necessary or desired, particles may be transferred to collection wells containing appropriate solutions or media, such as neutral salt buffers, tissue culture media, sucrose solutions, lysing buffers, solvents, fixatives and the like.

In an illustrative embodiment, the chamber may be constructed in a rectangular shape using, for example, two glass slides as chamber walls. These chamber walls may be spaced apart by spacers to create the rectangular design. These spacers may be made of, for example, glass, polymeric material such as TEFLON, or any other suitable material. The size of the chamber and spacing between chamber walls is dependent on the size of the particles which are to be discriminated. To practice the methods of the present invention, an apparatus may have spacing between about 100 nm and about 1 mm, and more preferably between about 20 microns and about 200 microns in an illustrative embodiment for the purpose of discriminating mammalian cells. Further, a longer chamber may be desired to permit greater discrimination throughput. An apparatus according to the present invention can discriminate cells at a rate between about 1000 and about 3 million cells per second. Factors that determine discrimination rate include, for example, the dielectric properties of the particles to be discriminated, the electrode design, length of the chamber, fluid flow rate, and frequency and voltage of the electrical signals. The chamber dimensions may be chosen to be appropriate for the input matter type, characteristics, and degree of discrimination desired or required.

In other embodiments, one or more surfaces of the chamber may support an electrode array. The electrode array may be a microelectrode array of, for example, parallel electrode elements. In certain embodiments, the electrode elements may be spaced about 20 microns apart. The apparatus may accommodate electrode element widths of between about 0.1 microns and about 1000 microns, and more preferably between about 1 micron and about 100 microns for embodiments for the discrimination of cellular matter. Further, electrode element spacing may be between about 0.1 microns and about 1000 microns, and for cellular discrimination more preferably between about 1 micron and about 100 microns. Alteration of the ratio of electrode width to electrode spacing in the parallel electrode design changes the magnitude of the dielectrophoretic force and thereby changes the particle levitation characteristics of the design. The electrode elements may be connected to a common electrical conductor, which may be a single electrode bus carrying an electrical signal from the signal generator to the electrode elements. Alternately, electrical signals may be applied by more than one bus which provides the same or different electrical signals. In certain embodiments, alternate electrode elements may be connected to different electrode buses along the two opposite long edges of the electrode array. In this configuration, alternate electrode elements are capable of delivering signals of different characteristics. As used herein, "alternate electrode elements" may include every other element of an array, or another such repeating selection of elements. The electrode elements may be fabricated using standard microlithography techniques that are well known in the art. For example, the electrode array may be fabricated by ion beam lithography, ion beam etching, laser ablation, printing, or electrodeposition. The array may be comprised of for example, a 1 00nm gold layer over a seed layer of 10nm chromium.

An apparatus according to the present invention may be used in a method of discriminating particulate matter and solubilized matter utilizing dielectrophoresisand field flow fractionation. This method includes the following steps. First, a carrier medium, such as a cell suspension medium, tissue culture medium, a sucrose solution, or the like, which includes the matter to be discriminated, may be introduced into one or more inlet ports of the chamber. This introduction causes the carrier medium to travel through the chamber according to a velocity profile. At least one alternating electrical signal may be applied to the one or more electrode elements at different phases, which creates a travelling electric field, which may also be spatially inhomogeneous, within the chamber. As used herein, "different phases" means that adjacent electrode elements within an array may receive signals having different phases. However, many electrode elements may receive signals of the same phase. For example, four adjacent electrode elements may receive signals of 0°, 90°, 180° and 270° respective phase. The next four adjacent electrode elements may receive signals having this same phase relationship. Many other such phase relationships between electrode elements may be used, and the sequence and number of electrode elements which have the same phase may be varied.

The field created by the different phases causes the matter within the chamber to be displaced to positions within the carrier medium. Thus, the matter is discriminated according to its position within the carrier medium. Specifically, the matter may be discriminated, for example, according to the velocity profile of the carrier medium because the velocity profile of the carrier medium causes the carrier medium at different positions within the chamber to travel at differing velocities. To further discriminate matter, the electrical signal may be varied (frequency, magnitude, phase, or any combination thereof). Such a change thereby causes a change in the travelling alternating electric field which, in turn, changes the displacement of the matter with respect to the electrode elements.

Another method according to the present invention includes discriminating particulate matter and solubilized matter utilizing dielectrophoresis and field flow fractionation according to the following steps. First, the matter is introduced into at least one inlet port of a chamber according to the present invention. Next, a transport fluid, which may be, for example, a tissue culture medium or a gas, is introduced into at least one duct. The effect of this fluid in the chamber causes a fluid flow in the chamber at a speed according to the velocity profile within the chamber. At least one electrical signal is applied to electrode elements at different phases. These energized electrodes thereby create a travelling electric field, which may also be spatially inhomogeneous, within the chamber. The field causes a DEP force on the matter causing the matter to be displaced to a position within the transport fluid. As this transport fluid is subjected to a velocity profile, the matter is thereby partitioned according to its position within the transport fluid flow. It is further possible to collect the matter at one or more outlet ports. Moreover, the matter may be collected at a time dependent upon the velocity profile of the transport fluid.

There are further steps possible to more precisely discriminate matter. These steps include the following. First, the alternating electrical signal or signals may be selected at a frequency and voltage combination which causes the matter to be either attracted towards or repelled from the electrode elements. By doing so, the matter is more clearly displaced within the transport fluid. By application of such a voltage and frequency combination, it is possible to hold the matter in close proximity to the electrode elements.

It is possible to select a frequency to attract desired or nondesired matter. As used herein, desired matter may be any matter which is desired to be discriminated and collected for further use. For example, the separation of normal blood cells from a sample including cancer cells may be desired for use in returning these normal cells into a patient's bloodstream (not within the scope of protection of the claims). Nondesired matter may be matter which is desired to be discriminated for other purposes. For example, cancer cells from a patient's blood or bone marrow may be discriminated so that a sample of blood not containing the cancer cells may be returned to the patient (not within the scope of protection of the claims).

A method for discriminating such a combination of matter may include the following. A frequency is selected so that the nondesired matter is held in close proximity to the electrode elements and the desired matter is partitioned from the nondesired matter by the fluid flow. This frequency may be known as a holding frequency. The fluid flow then carries the desired matter to the outlet port or ports of the chamber, where it may be collected. After collection, the desired matter may, for example, be returned to a patient's bloodstream or bones (not within the scope of protection of the claims), or it may be used in a diagnostic manner. Then, to clear the chamber, the frequency may be changed, or the voltage itself may be turned off. This will cause the nondesired matter to be released from close proximity to the electrode element and will be partitioned by the fluid flow. This nondesired matter may then flow through the chamber in the fluid, and may be collected, if desired. After collection, the nondesired matter may be used, for example, for diagnosis or other purposes.

In an alternate embodiment, it may be possible to hold desired matter in close proximity to the electrode elements, and first partition the nondesired matter by the fluid flow, following the same steps outlined above.

The apparatus and method of the present invention may be used for a number of different useful manners. For example, the method may be used to determine characteristics of an unknown particulate matter and unknown solubilized matter in a sample of matter. These characteristics can then be compared to known matter. Additionally, the method may be used to diagnose a condition by determining a presence of unidentified particulate matter and unidentified solubilized matter in a patient sample. This unidentified matter may be, for example, the presence of a cancer, a virus, parasite, or the like. After determining the presence of a condition, the method may be used to treat the condition by using the apparatus according to the present invention to discriminate the cancer, virus, parasite or the like from normal blood or bone marrow cells.

"Manipulation" as used in relation to the present invention may include, for example, characterization, separation, fractionation, concentration and/or isolation. Typical biological applications for the device useful for specific products and services include the manipulation of tumor cells, such as epithelial tumor cells or leukemia cells, from blood and hemopoietic stem cells, purging of tumor cells from bone marrow and hemopoietic stem cells and mixtures with other normal cells, purging of residual T-lymphocytes from stem cells, and enrichment of specific target cell types including tumor cells, stem cells, etc. Also included is the manipulation of leukocyte cell subpopulations, removal and concentration of parasitized erythrocytes from normal erythrocytes in malaria and of other parasitized cells from their normal counterparts, manipulation of cells at different phases of the cell cycle, manipulation of viable and non-viable cells, manipulation of free cell nuclei, and manipulation of nucleated fetal erythrocytes from maternal blood for further analysis including genetic testing. Moreover, the invention contemplates the manipulation of bacteria, viruses, plasmids and other primitive organisms from water, blood, urine, cell mixtures and other suspensions, manipulation and identification of tumor cells in biopsies, plaques and scrape tests including Pap smears, and the manipulation and identification of metastatic tumor cells from cell mixtures.

With different and smaller electrode geometries, it is contemplated that the technology can be used for molecular applications including manipulation of DNA or RNA molecules and/or DNA or RNA fragments according to their molecular weight, folding characteristics and dielectric properties, manipulation of chromosomes, manipulation of specific protein/DNA and protein/RNA aggregates, manipulation of individual proteins from a mixture, and manipulation of specific subcellular molecular complexes and structures.

In order to optimize particle discrimination in different applications it is understood that the apparatus may encompass use of specifically-targeted electrodes and chamber designs. These designs should provide a sensitive dependency of the height of particle levitation on the particle dielectric properties. For example, alteration of the ratio of electrode width to electrode spacing in the parallel electrode design changes the vertical component of the dielectrophoretic force and thereby changes the particle levitation characteristics of the design. Other strategies for providing improved particle discrimination include, for example, using more than two sets of electrode elements with different frequencies and/or voltages applied to them and the exploitation of synergism between electrical signals applied to electrode arrays on both the chamber bottom and top walls. In addition, dielectric (i.e. non-conducting) elements can be placed within the chamber to modify both the electrical field distribution and the hydrodynamic flow profile. The electrode element size and shape may be designed to optimize discrimination. Furthermore, several electrode geometries (energized with the same or different electrical signals) can be connected serially so as to provide for stepwise discrimination between different particulate matter and solubilized matter. Different chamber configurations can also be used in series. Finally. cells that have been separated by an upstream cDEP/FFF or gDEP/FFF configuration can be collected and held downstream by cDEP or gDEP trapping for characterization.

## BRIEF DESCRIPTION OF THE DRAWINGS

The following drawings form part of the present specification and are included to further demonstrate certain embodiments of the present invention. The invention may be better understood by reference to one or more of these drawings in combination with the detailed description of specific embodiments presented herein.

FIG. 1A is a block diagram of an apparatus according to an embodiment of the present invention.

FIG. 1B is a block diagram of an embodiment in which an electrode array is positioned normal to a fluid flow.

FIG. 1C is a block diagram of an embodiment in which an electrode array is positioned parallel to a fluid flow.

FIG. 2A is a side view of an apparatus according to an embodiment of the present invention which describes a typical trajectory of matter introduced into the apparatus.

FIG. 2B is a top view of the apparatus of FIG. 2A which describes a typical trajectory of matter introduced into the apparatus.

FIG. 2C is an end view of the apparatus of FIG. 2A.

FIG. 3A is a graphical representation of HL-60 cells exiting an apparatus according to an embodiment under the influence of field flow fractionation, as a function of time.

FIG. 3B is a graphical representation of HL-60 cells exiting an apparatus according to an embodiment under the influence of field flow fractionation, as a function of time.

FIG. 3C is a graphical representation of HL-60/Human Whole Blood cells exiting an apparatus according to an embodiment under the influence of field flow fractionation, as a function of time.

FIG. 4A is a graphical representation of DS19 cell levitation height under the influence of cDEP as a function of frequency.

FIG. 4B is a graphical representation of DS 19 cell levitation height under the influence of cDEP as a function of voltage.

FIG. 5A is a graphical representation of velocity of HL-60 cells travelling through an apparatus according to an embodiment under the influence of combined cDEP/FFF forces as a function of frequency.

FIG. 5B is a graphical representation of velocity of MDA 468 cells travelling through an apparatus according to an embodiment under the influence of combined cDEP/FFF forces as a function of frequency.

FIG. 5C is a graphical representation of velocity of MDA 435 cells travelling through an apparatus according to an embodiment under the influence of combined cDEP/FFF forces as a function of frequency.

FIG. 5D is a graphical representation of velocity of MDA 435 cells travelling through an apparatus according to an embodiment under the influence of combined cDEP/FFF forces as a function of voltage.

## DESCRIPTION OF ILLUSTRATIVE EMBODIMENTS

The following examples are included to demonstrate illustrative embodiments of the invention. It should be appreciated by those of skill in the art that the apparatus and techniques disclosed in the examples which follow represent devices and techniques discovered by the inventor to function well in the practice of the invention, and thus can be considered to constitute preferred modes for its practice. While the following examples use the term particle, the skilled artisan will realize that the present apparatus and methods are suitable to solubilized matter as well.

## EXAMPLE I

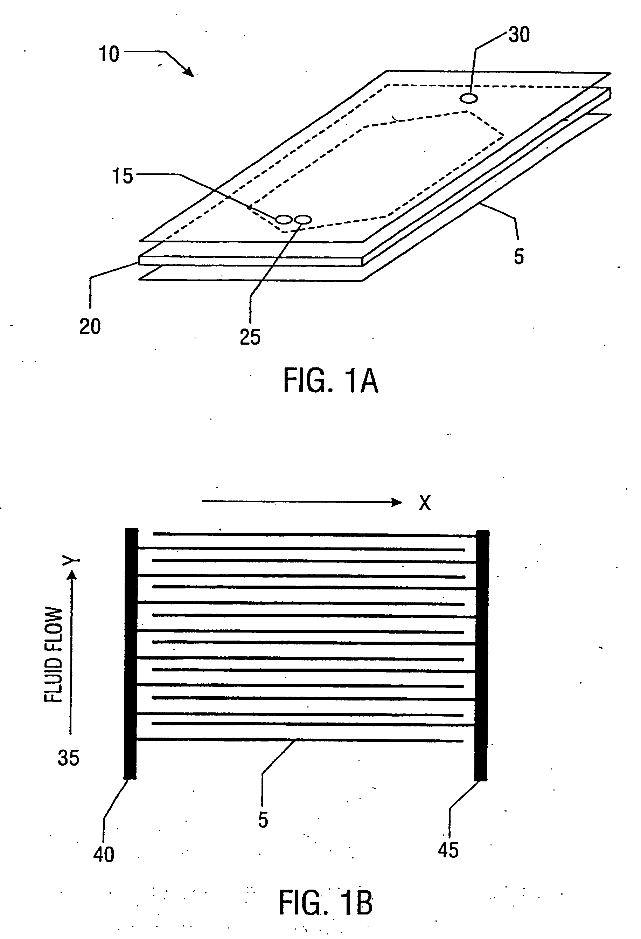

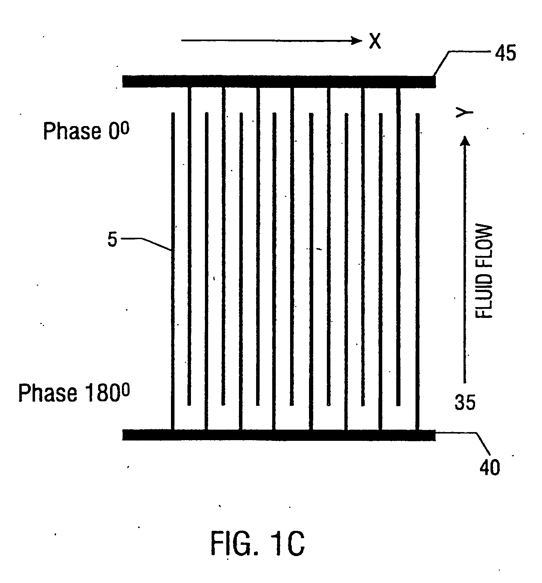

FIG. 1A shows one exemplary embodiment of an apparatus according to the present invention. In this figure, the electrode array 5 is placed on the bottom of a chamber 10; however it is contemplated that the electrode array may be placed on the top and/or bottom walls and/or side walls of a chamber constructed in accordance with the present invention. As shown in FIG. 1 B, the electrode array 5 may be placed along a chamber wall in a position normal to a flow of fluid 35 through the chamber 10. It is to be noted that the array may be adapted at any angle with respect to the fluid flow, for example, parallel or at any other angle. In this embodiment, the walls are aligned to create a thin chamber. The walls are spaced apart by a spacer 20, which may be, for example, constructed of the same material as the chamber walls, or a TEFLON spacer, a sealing compound, or any other dielectric or conductive material. Electrical signals applied to the electrode array create an inhomogeneous alternating electric field that varies with the frequency and magnitude of the input signal. In a particular embodiment, the electrode element 5 may be adapted to be substantially normal to the fluid flow 35, as shown in FIG. 1 B. Further electric conductors, which may be electrode buses 40 and 45 may provide electrical signals to alternate elements of electrode array 5. The strength of the electric field is dependent on the applied voltage, position within the chamber, and the size and spacing of electrode elements. For manipulation of mammalian cells, the field strength may be on the order of approximately $1 \times 10^6$ V/m, although this may be much higher for matter placed in an oil medium. The particulate matter desired to be discriminated is introduced into the chamber in a carrier medium that flows into at least one inlet port 15. There may be more than one inlet port however, which permits input of the carrier medium. The carrier medium may be input by a digital syringe pump, a manual syringe, a peristaltic pump, a gravity feed catheter, or the like. As discussed above, the particulate matter may include, for example, biological molecules and non-biological molecules. Also, the matter may include solubilized matter. The carrier medium may be, for example, an eluate consisting of a cell-free suspension buffer, including a mixture of sucrose and dextrose, tissue culture medium, non-ionic or zwitter ionic solutes, or other suspension mediums or non-biological oils, solvents such as phenol alcohol, $CCl_4$, ethylene glycol, or others known in the art. Alternately, one or more ducts 25 may be provided to input a fluid which may be flowed through chamber 10.

The carrier medium is caused to flow through the chamber and thereby create a laminar flow profile in which the fluid flow velocity increases with increasing distance from the chamber top and bottom walls, and reaches its maximum at the center. However, by adjusting the shape of the chamber, for example, a flow profile may be created in which the maximum is at a location other than the center of the chamber. In an exemplary embodiment, the flow rate may be on the order of about 0.1 ml/min. to about 100 ml/min., and more preferably about 1 ml/min. to about 100 ml/min. The electric field applied to the electrode elements 5 creates conventional dielectrophoretic forces on the particles in accordance with their dielectric and conductive properties as well as those of the carrier medium.

By controlling the frequency and/or intensity of the applied electric field, the component of the dielectrophoretic force that is normal to the direction of the carrier medium is controlled so as to cause the particles to equilibrate at characteristic distances from the electrode element 5 creating the electric field. In particular embodiments, the dielectrophoretic force may act solely in a vertical direction so as to cause the particles to equilibrate at levitation heights above the chamber bottom wall. Such a force may be present in a vertical chamber or a chamber adapted for use in space. This dielectrophoretic force operates in conjunction with the action of the combined hydrodynamic and gravitational forces. Since the dielectrophoretic force acting on each individual particle depends upon its dielectric permittivity and electrical conductivity at the applied frequency, as well as upon its volume, particles having different properties will be positioned at different distances from the electrode element creating the electric field. Because the fluid at different heights above the chamber bottom wall flows at different velocities, particles having differing physical properties will travel through the chamber 10 at different speeds and emerge at an outlet port 30 at different times. It is to be understood that there may be more than one outlet port from which to collect the particulate matter which exits the chamber 10.

The chamber 10 of FIG. 1A may also utilize twDEP forces in addition to cDEP forces and field flow fractionation, according to the present method, thereby displacing matter in two-dimensions (time and horizontal). The electrode array may be adapted to be substantially parallel to the fluid flow, as shown in FIG. 1C. As discussed above, the cDEP force on the matter causes it to be displaced to a position within the fluid flow. In addition, when the electrode elements 5 are energized with different phases, a twDEP force on matter which acts substantially parallel to the plane of the electrode elements 5. and substantially transverse to the fluid-flow occurs. Therefore, matter is deflected laterally across the chamber 10 from the original narrow flow stream in which it entered the chamber 10. The deflected matter therefore travels through the chamber 10 and exits through the outlet port 30 at positions laterally displaced from the inlet port 15 through with it entered. Thus, the combined influence of the cDEP and twDEP forces results in a time and horizontal displacement of matter.

## EXAMPLE 2

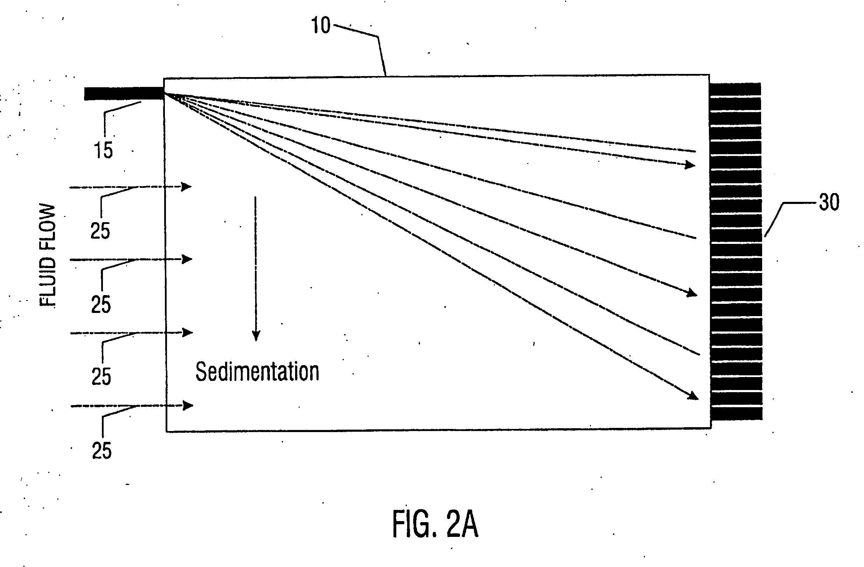

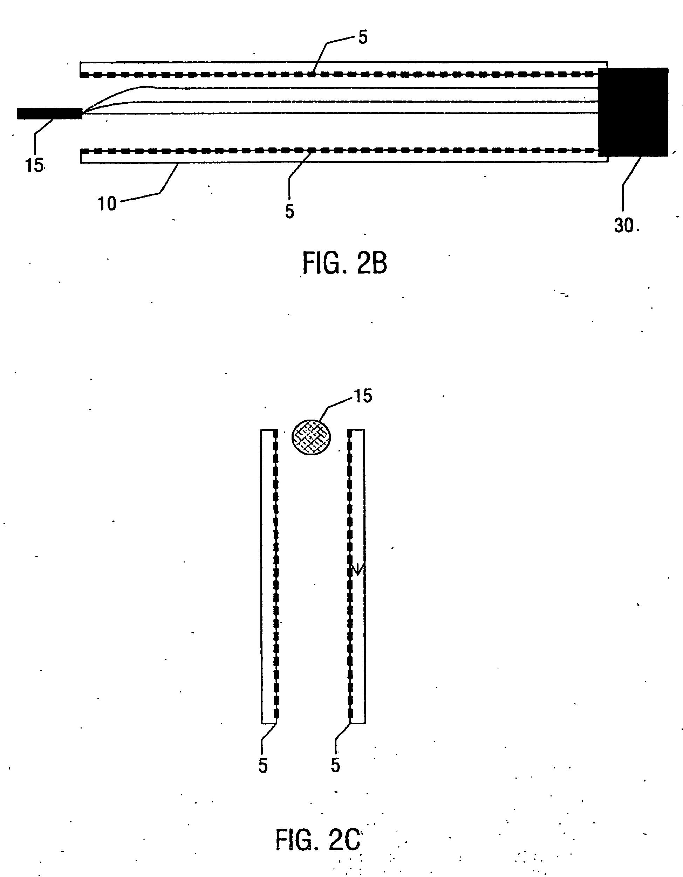

FIG. 2A shows a second embodiment of an apparatus according to the present invention that includes a chamber 10 having two facing electrode arrays 5, as shown in FIGS. 2B and 2C, on opposite surfaces of the chamber. The chamber is turned so that the electrode planes 5 stand substantially vertical. In this embodiment, the chamber is arranged so that the thin sides of the chamber are vertically arranged. It is understood, however, that the electrode planes need not be only vertical, and the present invention contemplates adapting the apparatus at varying angles. Different electrical signals (frequency and magnitude) are applied to the facing electrodes from the signal generator so that particles experience different cDEP forces from the field produced by each array 5. Further, within each facing electrode array 5, different electrical signals may be provided by the signal generator to create an inhomogeneous alternating electric field.

This alternate apparatus may have, for example, one inlet port 15 adapted to receive the particulate matter to be discriminated. The inlet port 15 may be located, for example, close to the top of one end of the chamber 10. This apparatus may also include one or more ducts 25 to introduce a fluid that travels through the chamber 10. The ducts 25, which may be arranged substantially along the entire width of the input end of the chamber 10, serve to introduce a sheet of fluid that travels throughout the chamber 10 in a substantially linear direction.

The introduced fluid carries the particulate matter through the chamber 10. This fluid may be, for example an eluate, such as a cell-free suspension having a mixture of dextrose and sucrose, tissue culture medium, non-ionic or zwitterionic solutions, or other suspension mediums or non-biological oils, solvents such as phenol, alcohol, $CCl_4$, ethylene glycol, or others known in the art. Following transit through the chamber 10, fluid leaves at the opposite end through an exit port. This exit end of the chamber 10 may include, for example, one or more exit ports 30, which may be arranged in one or more arrays of ports as shown in FIG. 2A. In the absence of an applied field, that is, when no electrical signal is applied to the electrode elements 5, particles move through the chamber 10 under the influence of fluid flow. This fluid can be controlled to flow at different speeds. Further, based on the geometrical design of the chamber 10, the fluid may exhibit, for example, a laminar flow, in which the speed of the flow is fastest towards the center of the chamber 10. That is, the hydrodynamic flow profile is along a horizontal plane. Simultaneous to the influence of the fluid flow, the particles undergo sedimentation due to gravitational forces on the particles, so that they exit the chamber 10 at characteristic heights determined by their sedimentation rates.

When electrical signals are applied, however, the particles experience cDEP forces that cause them to move to characteristic distances, known as an equilibrium position, from the side walls of the chamber 10 where the electrode arrays 5 are arranged. In this embodiment, different electrical signals (frequency or magnitude or both) are applied to electrode elements 5 on each of the side walls. Different particles equilibrate at different characteristic distances from the side walls of the chamber, based on the synergism of the differing electrical signals, which create an inhomogeneous electric field, causing DEP forces on the particles. These different signals cause different particles to equilibrate at different characteristic distances from the side walls of the chamber, based on the synergism of the DEP forces caused by the electric field created by the differing signals.

Such particle equilibration depends on the dielectric and conductive properties of the particles, the magnitude and frequency of the electrical fields applied to the electrodes on the facing chamber walls, and the fluid density, viscosity and flow rate as shown in FIG. 2B. Matter introduced into chamber 10 travels at different positions from electrode arrays 5. The velocities of the different particles within the fluid are controlled by the velocity profile of the fluid. Because fluid flowing through a thin chamber sets up a velocity profile, particles that have equilibrated at different distances from the chamber walls will be carried at different velocities and therefore take varying amounts of time to traverse the chamber. The fluid flows at a maximum velocity towards the center of the chamber, with this velocity proportionately diminishing as distance to the side walls decreases. The fluid flow rate may be between about 0.1 ml/min. and about 1000 ml/min., and more preferably between about 1 ml/min. and about 100 ml/min.

The skilled artisan will recognize, however that variations in the dimensions of the apparatus will affect the fluid flow rate, and that the indicated flow rates are illustrative for the dimensions of the present apparatus.

The distance that particles sediment during their passage across the chamber will depend upon their transit time, as gravity forces act on the particles during their transit through the chamber. Consequently different particles will sediment to different depths based upon the particle's transit time through the chamber 10. Particle sedimentation also depends on particle characteristics, such as size, mass, and volume, for example. Therefore, the time required for particles to travel across the entire length of the chamber is controlled by the fluid flow profile. The placement of particles within the fluid flow profile is in turn determined by the synergism of the differing electrical signals. Discrimination may be accomplished either in "batch mode" or in "continuous mode." In batch mode, an aliquot of particles is injected and collected with respect to the time of transit for the particles and the height of exit at the outlet ports 30. In continuous mode, a constant stream of particles is injected into the inlet port, and particles emerging at different heights are continuously collected.

In an apparatus according to the present invention, it is possible to vary the carrier fluid characteristics at different heights with respect not only to flow rate but also to fluid density, dielectric permittivity, pH and conductivity. In this way additional particle characteristics may be exploited for particular separation applications.

In the general case, the device may be oriented at any angle to take advantage of discriminating aspects of the horizontal and vertical cases described above. In this generalized situation the particle density, sedimentation rate and dielectric properties, together with all components of the cDEP force are utilized. Separation in continuous or batch mode is possible. Different embodiments of an apparatus according to the present invention may have additional components connected to the outlet ports 30. For example, particles emerging from the exit ports 30 of the apparatus of the present invention may be collected by one or more fraction collectors, or the like. Additionally, the matter may be measured by one or more measuring or characterizing structures, such as a cytometer, for example. Furthermore, when necessary, particles may be transferred to collection wells containing appropriate solutions or media, such as neutral salt buffers, tissue culture media, sucrose solutions, lysing buffers, solvents, fixatives and the like to trap cells exiting the chamber.

According to the method of the present invention, the twDEP force is used, which acts in a substantially vertical direction from the combined fields produced by the electrode arrays 5. Different electrical signals (frequency, magnitude, and phase, or a combination thereof) may be applied to the facing electrodes 5 from the signal generator so that particles experience different cDEP and/or twDEP forces. The cDEP forces may act to displace matter to or away from the electrode plane and thereby equilibrate at an equilibrium position in the fluid flow stream. Matter also sediments as it travels through chamber 10. The distance that matter sediments as it travels depends on the time required to traverse chamber 10 and the sedimentation rate of the matter.

In this method, the distance of matter sedimentation is also affected by the twDEP force. Specifically, the twDEP force acts in a substantially vertical direction when electrode arrays 5 are located on the side walls of chamber 10 and arranged substantially parallel to the fluid flow. Therefore the twDEP force component adds to or opposes the sedimentation forces acting on the matter. Thus the net vertical displacement which the matter experiences as it traverses chamber 10 is modified.

Discrimination in this method may be accomplished in a continuous mode, whereby a constant stream of matter is injected into the inlet ports, and matter emerging at differing vertical displacements is continuously collected at the outlet ports. It may be possible to operate this embodiment in the pulse mode. To further achieve the benefits of discrimination, it may be possible to vary the carrier fluid characteristics at different vertical displacements by varying flow rate, fluid density, viscosity, dielectric permittivity, pH and conductivity of the carrier fluid. In this way, additional matter characteristics may be exploited for particular discrimination applications.

## Methods of Operation

The following descriptions detail construction of an apparatus and method of operation according to embodiments of the present invention.

In one embodiment, an apparatus according to the present invention was constructed using two glass slides (1" $\times$ 1.5", for example) as chamber walls. These walls may be spaced by Teflon spacers; however other methods of separating chamber walls, such as glue, polymer gaskets, or mechanical precision clamps may be used, for example. The distance of separation between walls may be between about 0.1 microns and about 1000 microns, and more preferably between about 10 microns and about 200 microns. In studies using the present apparatus, the distance of separation was 127 microns. One wall of the chamber supported a microelectrode array consisting of about 20 micron wide parallel electrode elements spaced about 20 microns apart. The electrode elements may run along the entire length of the chamber from the input port to the output port. It is understood that the length, width, thickness and spacing of electrode arrays may be altered to create electric fields of differing intensities and different inhomogeneity. It is also to be understood that an array of electrodes may be used with the present invention, or a single electrode element may be sufficient for certain applications, if combined with a ground plane. Further, it is to be understood that the electrode array may not be parallel, and other geometric configurations, such as serially arranged electrodes, linear, polynomial, interleaved, three-dimensional and the like may be utilized.

In an exemplary embodiment, alternate electrode elements may be connected to electrode buses along the two opposite long edges of the chamber wall. These electrode buses are connected to an electrical signal generator, which may be, for example, a function generator. Other suitable signal generators may include, for example, oscillators, pulse generators, digital output cards, klystrons, RF sources, masers, or the like. The electrode array may be fabricated using standard microlithographytechniques, as are known in the art. For example, the electrode array may be fabricated by ion beam lithography, ion beam etching, laser ablation, printing, or electrodeposition. The electrode array of the exemplary embodiment described herein consisted of 100nm gold over a seed layer of 10nm chromium. It is understood that the present invention contemplates using electrical signals in the range of about 0 to about 15V and about 0.1 kHz to about 180 MHz, and more preferably between about 10 kHz and about 10 MHz. In studies which are described below, the signals were provided by a HP 8116A function generator. The present invention may utilize a fluid flow of about 0.1 ml/min. to about 500 ml/min., and more preferably between about 1 ml/min and about 50 ml/min. In studies described below, fluid flow in the range of about 1-100 ml/min, was provided by a digital syringe pump.

## Field Flow Fractionation

Cell mixtures in the studies discussed below consisted of blood cells (collected by venipuncture from healthy volunteers and diluted with 90 parts $Ca^{2+}/Mg^{2+}$-free PBS containing 5 mM hemisodium EDTA) mixed in a ratio of 3:2 with HL-60 leukemia cells that had been cultured under standard conditions and harvested by centrifugation. Cell mixtures were washed twice in isotonic (8.5%) sucrose containing 3 mg/ml dextrose and resuspended at a final concentration of $2 \times 10^7$ malignant cells and $3 \times 10^7$ normal blood cells per ml in this same medium. The suspension conductivity was adjusted to 10 mS/m by addition of hemisodium EDTA to a final concentration of approximately 0.7 mM. It is contemplated by the present invention that other methods of obtaining and preparing samples are acceptable. Further, different ratios of the mixture may be used. For example, cell mixtures may be washed twice in an isotonic solution of 8.5% sucrose and 0.3% dextrose, resuspended at a final concentration of $1 \times 10^7$ malignant cells and $3 \times 10^7$ normal blood cells per ml in this same medium, and adjusted to a conductivity of 10 mS/m with a final concentration of ~0.7 mM hemisodium EDTA.

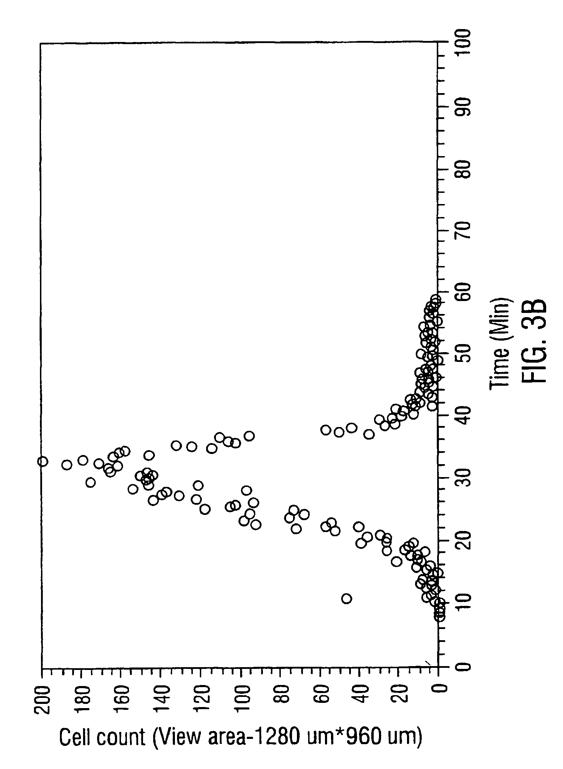

FIG. 3A shows the results of field flow fractionation on a sample of HL-60 cells (ATCC) cultured in a medium of RPMI 1640 10% FBS 22 mM HEPES in an apparatus as described above. The fractionation occurred at a flow rate of 200 ml/min. As shown in FIG. 3A, a sharp rise in HL-60 cells exiting the apparatus occurs at approximately 10 minutes after the flow of cells began. After this rise, the cell count rapidly tapers to a lower level which continues for approximately 50 minutes. FIG. 3B similarly shows the results of field flow fractionation of HL-60 cells at a flow rate of 100 ul/min. As shown in FIG. 3B, a sharp rise in HL-60 cells exiting the chamber occurs at approximately 30 minutes after the flow of cells began. Again, after this rise, the cell count rapidly tapers to a lower level which continues for approximately 30 minutes.

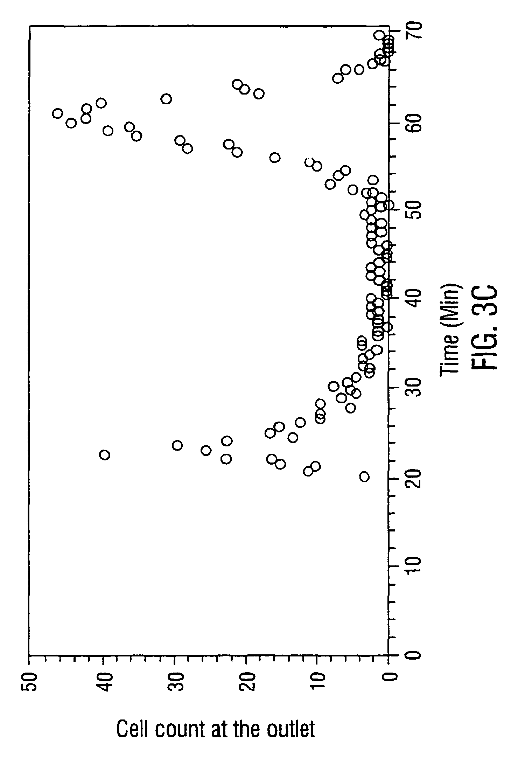

FIG. 3C shows the results of field flow fractionation on a mixture of HL-60 and human whole blood in a medium of 8.5% sucrose and 3 mg/ml dextrose adjusted to 10 mS/m, in an apparatus as described above. The fractionation occurred at a flow rate of 100 ml/min. As shown in FIG. 3C, a sharp rise in the HL-60 cells exiting the chamber occurred at approximately 20 minutes after the flow began. Thereafter, a second rise in the number of cells exiting occurred at approximately 60 minutes, which correlated to the exit of the human blood cells. However, it is noted that cells continue to exit before and after the peaks. Thus, separation by field flow fractionation is not capable of a complete separation. Therefore, FIGS. 3A, 3B, and 3C demonstrate that although field flow fractionation may discriminate and separate some particles of different characteristics,there is needed greater discrimination capabilities.

Three types of studies were performed that caused cDEP forces on the particulate matter. These examples do not fall within the scope of the appended claims.

## (1) Levitation of Cells Caused by cDEP Force

The levitation of DS-19 murine erythroleukemia cells (M. Rifkind) supported in 8.5% sucrose + 0.3% dextrose solution having a conductivity of 56 mS/m was investigated as a function of the frequency and voltage of signals applied to the electrode array in the absence of fluid flow. It is to be understood that various solutions having conductivities in the range of about 10 mS/m to about 2 S/m, such as tissue culture medium or the like, may be used. Further, it is possible to utilize a collection of cells only. Other solutions may be practicable so long as the conductivity of the solution is either much more conductive or much less conductive than the cell interiors.

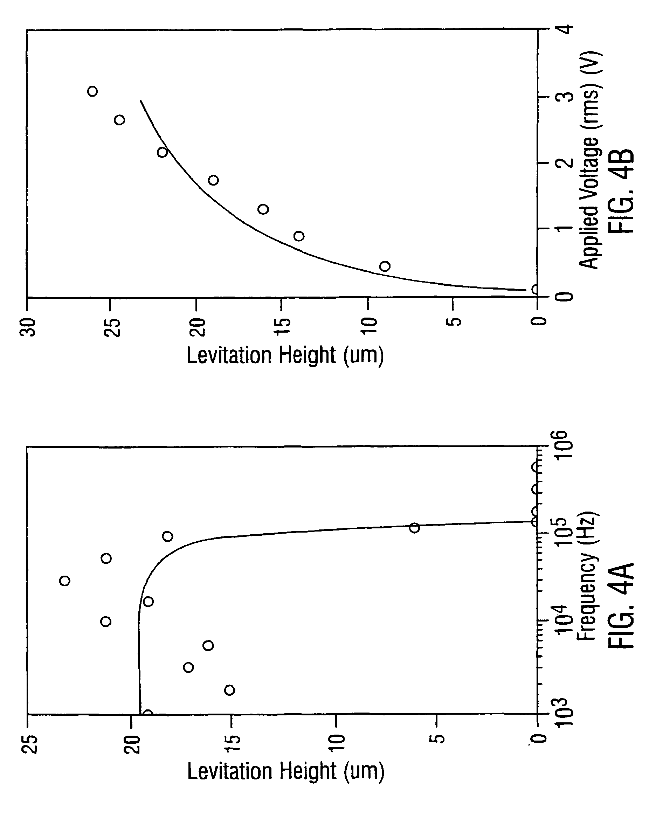

The results of this study are shown in FIG. 4A and FIG. 4B. In the frequency range 1 kHz - 40 kHz, DS19 cells were levitated to about 20 microns at an applied voltage of 4V peak to peak (p-p), as shown in FIG. 4A. Above 40 kHz, the levitation height dropped rapidly, and when the frequency reached 140 kHz and above, cells were no longer levitated but were instead attracted to electrode edges by positive cDEP.

At an applied frequency of 50 kHz, levitation of DS19 cells occurred when the applied voltage was above about 0.5 V p-p, as shown in FIG. 4B. Above this threshold, the cells levitated and the height of levitation increased with increasing voltage. This behavior was consistent with that predicted by cDEP theory, the dielectric properties of the cells as measured using the technique of electrorotation, and the density of the cells and their supporting medium.

## (2) Combined FFF/cDEP

A second study using the apparatus discussed above involved the velocity of HL-60 human promyelocytic leukemia cells supported in 8.5% sucrose + 0.3% dextrose solution having a conductivity of about 10 mS/m with an established fluid flow in the chamber, as a function of the frequency of the voltage signals applied to the electrode array. When no voltage signal was applied, the cell velocity was about 10 microns per second as they were transported under the influence of an applied fluid flow rate of 10 ml/min. The fluid flow may be either the solution including the cells to be tested, or it may be another fluid, or the same fluid without the cells. Additionally the solution may be ramped over time to alter, for example, the pH, or conductivity of the solution.

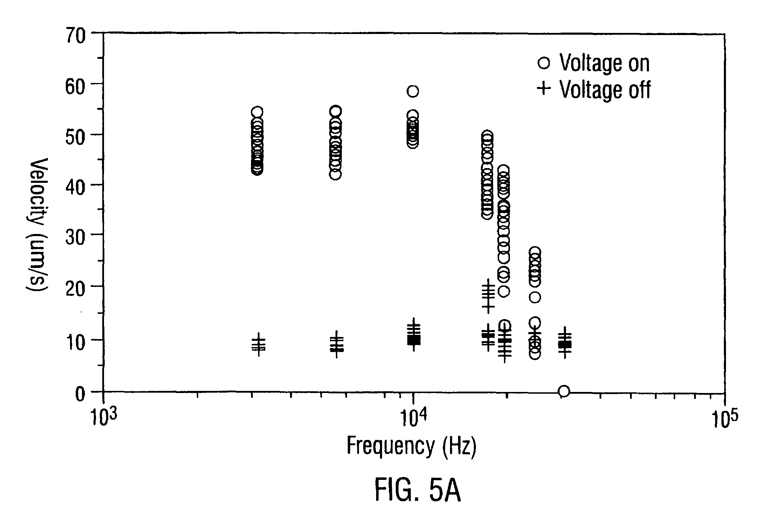

As shown in FIG. 5A, addressing the electrodes with voltage signals affected the height at which the cells traveled above the chamber bottom wall and thereby altered their position and velocity in the laminar flow. Below 10 kHz, cell velocity increased to about 50 microns per second with an applied voltage of 3 V p-p. As the frequency was increased in the range of about 10kHz to about 25 kHz, the cell velocity gradually fell as the levitation height was reduced. Above 30 kHz, these cells were attracted to the electrode and thus they ceased moving. This response with increasing frequency agreed with the behavior expected from the measured electrical properties of the cells.

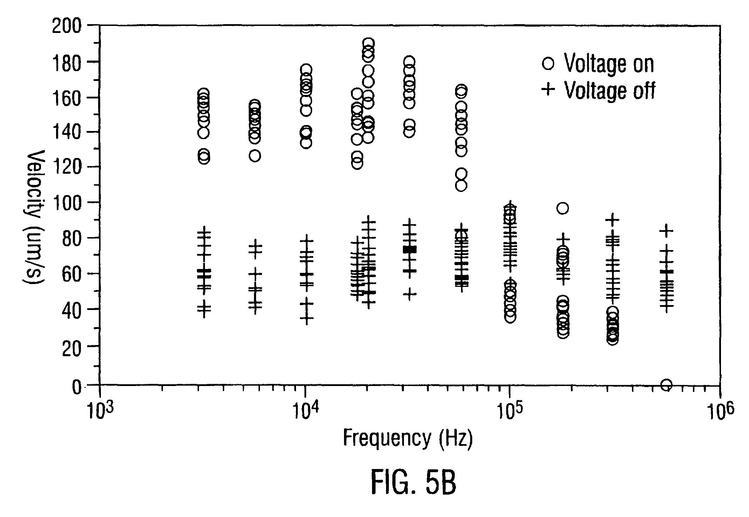

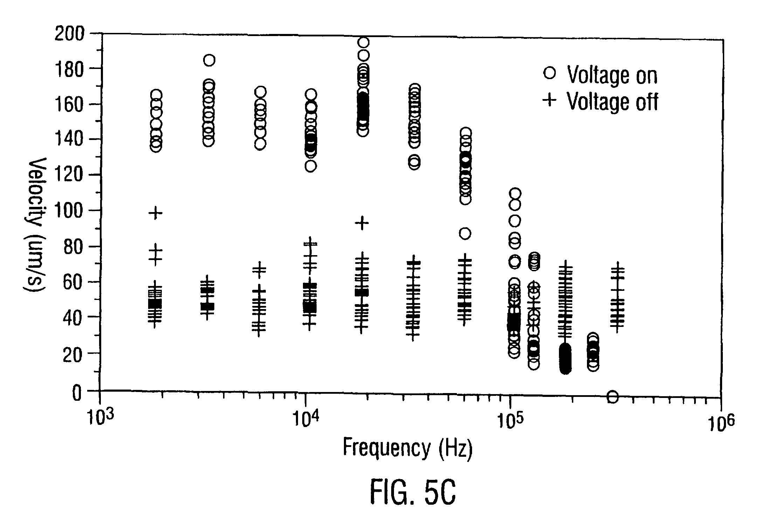

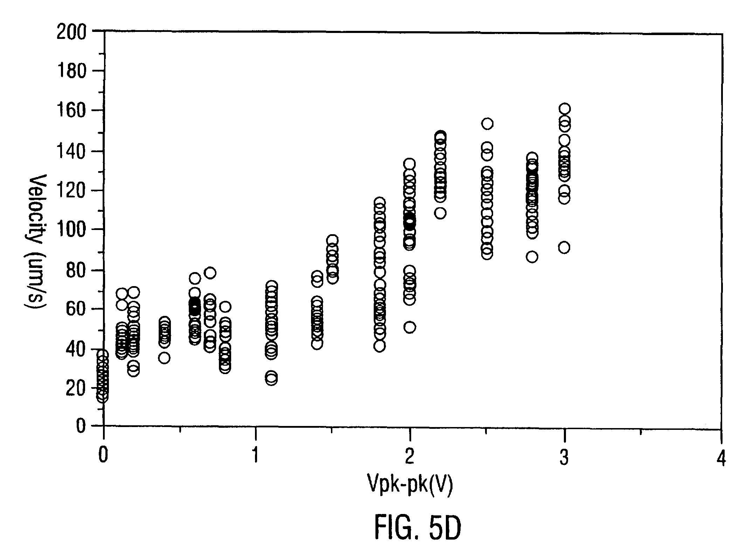

As shown in FIGS. 5B and 5C, similar results were obtained for studies using other cells having different cell properties. Specifically, FIG. 5B shows the results for MDA 468 cells (kindly supplied by Janet Price) in a solution of 8.5% sucrose 0.3% dextrose conductivity at 10 ms/m at a flow rate of 40 ml/min at 3 V p-p. FIG. 5C shows the results for MDA-435 cells (kindly supplied by Janet Price) in the same solution at a flow rate of 40 ul/min at 3 V p-p. FIG. 5D shows the results for MDA-435 cells at a flow rate of 40 ml/min at a frequency of 31.6 kHz. As noted in FIG. 5D, the velocity of cells increases approximately linearly with voltage.

### (3) cDEP/FFF on Mixture of HL-60 and Human Blood Cells

The chambers of the apparatus were preloaded with a mixture of HL-60 and human blood cells in the ratio 1: 10 at a total concentration of $5 \times 10^7$ cells/ml. The cells were supported in 8.5% sucrose + 0.3% dextrose solution having a conductivity of 10 mS/m. A voltage of 3 V p-p at 40 kHz was applied to the electrodes and fluid flow at the rate of 10 ml/min was started. All of the HL-60 cells were trapped at the edges of the electrode elements, while the human blood cells (mainly erythrocytes) were levitated and were transported by the fluid. By adjusting the frequency in the range of 8 - 15 kHz, HL-60 cells were also released and their rate of transport controlled relative to the erythrocytes. When HL-60 cells were levitated to heights above or below the erythrocytes, they moved correspondingly more quickly or more slowly than these blood cells depending on their position in the field flow.

Fluids were injected and removed through slots at each end of the chamber. The outlet port was furnished with a well to trap cells exiting the chamber. Prior to performing studies, the chamber was soaked for 5 minutes with 20% (w/v) bovine serum albumin solution to render the glass surfaces less adherent to cells. Alternately the glass surfaces may be air blown, or washed and treated with silane. Dielectrophoretic forces were generated by connecting alternate electrodes to sinusoidal voltages of fixed or swept frequencies, and were monitored using an oscilloscope. Forces to remove cells from the separation chamber were provided by laminar flow of an eluate buffer, controlled by two digital syringe pumps connected in push-pull configuration between the inlet and outlet ports of the chamber. A bubble-free path of fluid was maintained between the pumps at all times.

Following injection of approximately 30 ml of the cell mixture (about $1.2 \times 10^6$ cells) to half fill the chamber, a 200 kHz signal of 5 V peak-peak was applied to the electrode array for 30 s to collect all cells by positive DEP at the high-field regions of the electrode tips. It is not required, however, to only half-fill the chamber, and a larger chamber may allow for better discrimination. Flow of eluate (consisting of cell-free suspension buffer, which may also be a mixture of 8.5% sucrose plus 3 mg/ml dextrose having a conductivity of 10 mS/m), was then started at 5 ml/min. This flow may be accomplished under the control of two digital syringe pumps operating in a push-pull configuration between the inlet and outlet ports of the chamber. Alternately, the flow may be controlled by a peristaltic pump, gravity flow, blood pressure, or the like. The frequency of the applied electric signal was lowered until the tumor cells were selectively retained while the blood cells were eluted and trapped in the collection well. After 20 minutes, cells were removed from the well by cross-flow between two additional syringe ports without disturbing the tumor cells still on the electrodes. The voltage was then turned off to release the cells held by DEP and these were eluted and collected separately.

Returning to embodiments of the present apparatus two glass slides (1" x 3", for example) were used as chamber walls. These walls were spaced apart by TEFLON spacers with a distance of separation of approximately 50 microns. The apparatus may be arranged so that the glass slides comprise the side walls, and the spacers the top and bottom walls. Alternately, the apparatus may be arranged so that the glass slides comprise the top and bottom walls, and the spacers comprise the side walls. In this exemplary embodiment, the top and bottom walls supported microelectrode arrays consisting of about 20 micron wide parallel electrode elements spaced about 20 microns apart. The electrode arrays may be configured so that the electrode elements on one wall align with the spaces between electrode elements on the other electrode array. The electrode arrays may be further configured so that the electrode elements are arranged along the long walls of the chamber side walls so that the electrodes are aligned substantially parallel to the fluid flow. It is understood that the length, width, thickness and spacing of electrode arrays may be altered to create electric fields of differing intensities and different inhomogeneity, and traveling spatially as a function of varying phase. However, it is also to be understood that the electrode arrays need not be parallel, and other geometric configurations, such as serially arranged electrodes, linear, polynomial, interleaved, three-dimensional and the like may be utilized.

In an exemplary embodiment, alternate electrode elements may be connected to electrode buses along the short ends of the chamber side walls. The electrode buses on one chamber side wall may receive electrical signals having 0° and 180° relative phase, and the buses on the other chamber side wall may receive signals having 90° and 270° relative phase. It is understood that alternate electrode elements may receive signals having relative phases of differing values. These electrode buses are connected to an electrical signal generator, which may be, for example, a digital synthesizer. Other suitable signal generators may include, but not be limited to, oscillators, function generators, pulse generators, digital output cards, klystrons, RF sources, masers, or the like. The electrode array of the embodiment described herein consisted of 100nm gold over a seed layer of 10nm chromium fabricated by standard microlithographic techniques. It is understood that the present invention contemplates using electrical signals in the range of about 0 to about 15V and about 0.1 kHz to about 180 MHz, and more preferably between about 10 kHz and about 10 MHz. In the study described below utilizing this apparatus, the signals were provided by a custom-built digital synthesizer. The present invention may utilize a fluid flow of about 0.1 ml/min. to about 500 ml/min., and more preferably between about 1 ml/min and about 50 ml/min. In studies described below, fluid flow in the range of about 1-100 ml/min, was provided by a digital syringe pump.

### (4) Levitation of Cells Caused by gDEP Force

This example is according to the present invention.

The levitation of DS-19 murine erythroleukemiacells (M. Rifkind) supported in 8.5% sucrose + 0.3% dextrose solution having a conductivity of 10 mS/m was investigated as a function of the frequency of signals applied to the electrode array both in the absence of fluid flow and with a fluid-flow. It is to be understood that various solutions having conductivities in the range of about 10 mS/m to about 2 S/m, such as tissue culture medium or the like, may be used. Further, it is possible to utilize a collection of cells only. Other solutions may be practicable so long as the conductivity of the solution is either much more conductive or much less conductive than the cell interiors.

The DS19 cell mixed in the suspension medium was introduced into the chamber at a flow rate of 10 ml/min. As the frequency of the electrical signals was gradually increased from approximately 1kHz to approximately 15 MHz at 3 volts peak-to-peak, three kinetic effects were observed:

(i)1 to 30 kHz. Cells were levitated above the electrode plane by cDEP forces (typically by about 18 mm, depending on frequency) and moved counter to the applied travelling wave by twDEP forces at rates that increased with increasing frequency to approximately 40 microns/sec. Fast-moving cells overtook slow ones without forming pearl-chains commonly observed when cDEP alone is used for cell manipulation. In the presence of fluid flow applied at right angles to the twDEP forces at a flow rate of 10 ml/min., individual cells were deflected to different degrees depending on their electrical characteristics. Furthermore, the velocity of cells due to the fluid flow depended on their distances from the electrode plane in accordance with cDEP/FFF principles.

(ii)30 to 50 kHz. The cDEP force acting on the cells was very small and cells remained close to the electrodes at the bottom of the chamber. Some cells were deflected in the same direction as the travelling wave by the twDEP forces, other cells were barely deflected, and some cells were deflected in the opposite direction to the twDEP waves. In the presence of fluid flow at a flow rate of 10 ml/min., maximal differences in cell velocity in the fluid stream occurred due to cDEP/FFF influences, and twDEP forces resulted in different degrees of deflection across the fluid stream for different cells.

(iii)50 kHz to 15 MHz. Cells were mostly attracted to electrode edges and immobilized under the influence of strongly positive cDEP forces.

These findings agreed with the predictions of generalized dielectrophoresis. They show further that the combined influence of cDEP and twDEP make possible a new type of cell sorting that depends on both the real and imaginary components of the cell electrical polarizability as well as the suspending medium dielectric and conductive properties.

It is contemplated that the apparatus and method according to the present invention may be used for cell or particle characterization, as a diagnostic tool to identify, for example, cancer cells or other cells that are desired or of interest to the clinician, and as a therapeutic tool to purge a patient sample of undesired cells or other particle.

For example, the method may be used to characterize the physical properties of an unknown particulate matter. A sample including an unknown biological or organic or mineral sample may be input into the chamber and separated according to the procedures set forth above. Following separation and removal of extraneous particles, the unknown particle may be collected at an output port of the chamber. The particle can then be analyzed using standard particle characterization techniques known in the art, such as those used in diagnostic microbiology and in histology, for example, electron microscopy. After determining characteristics that are unique to a particle, an investigator may then compare these characteristics to the known characteristics of a particle. Therefore, the researcher may determine whether the unknown particle is the same as a known particle, or whether it has similar properties.

In addition, the invention contemplates the characterization of known particles, which may then be used as a reference tool for determining unknown particles based on similar trapping frequencies, voltages, flow rates, and other parameters set forth above. The sample may be introduced into the chamber and then be subjected to the separation methods detailed above. By performing these separation techniques, the trapping frequency and release frequency of the particle can be determined. These values are then useful in comparing similar parameters of an unknown sample to this known sample. Certain clinical applications requiring separation of a known particle from an unknown particle would require such values to complete the methods of separation.

A clinical application would be to use the present apparatus and method as a diagnostic tool to screen unknown samples for the presence or absence of various cell types. First, as set forth previously, a patient's sample may be placed in the apparatus, and various cell types may be separated based on previously determined parameters or characteristics. These cells may include cancer cells, or cells infected with bacteria, viruses, protozoans, or parasites, bacteria, viruses protozoans, or they may include cells that are deficient in certain enzymes or cell organelles, altered biopsies, plaques and scrape tests including Pap smears and so forth. Thus, it is well within the scope of the invention to separate all types of particles that have differential sedimentation rates in a fluid stream, based on size, density, dielectric strength, and conductivity, for example. Therefore, the present invention may be used to diagnose the presence of a condition, for example, a cancer, or other cellular disorder.

Another clinical application would be to use the apparatus and method of the present invention to separate unwanted cells, such as cancerous cells, from a cell population including wanted or normal cells. For example, once a cancer has been detected, for instance in bone marrow, a patient's bone marrow may be input into an apparatus to separate the cancer cells, or preneoplastic cells, from normal cells. These normal cells may then be collected at the output of the chamber and returned to the patient (not within the scope of protection of the claims), while the unwanted cancer cells may be later collected at the output of the chamber and characterized, utilized in further studies, or discarded. In this manner, unwanted cells are purged from a normal cell population, while at the same time a particular cell type is enriched, such as tumor cells, normal cells, progenitor cells, etc.

The apparatus and method disclosed and claimed herein can be made and executed without undue experimentation in light of the present disclosure.

## REFERENCES

The following references, to the extent that they provide exemplary procedural or other details supplementary to those set forth herein, are specifically incorporated herein by reference.

1. Arnold, W.M. *et al.* (1982) *Naturwissenischaften,* 69, 297-300.

2. Becker *et al.* (1995) *Proc. Natl. Acad. Sci.* 92, 860-864.

3. Becker, F. F. *et al.* (1994) *J. Phys. D: Appl. Phys.* 27(12), 2659-2662.

4. Boyum, A. (1974) *Tissue Antigens* 4, 269-274.

5. Cantrell, D.A. *et al.* (1992) *Ciba. Found Symp.* 164,208-222.

6. Chess, L. *et al.* (1976) in: *In vitro Methods in Cell Mediated and Tumor Immunity,* 255-261.

7. Fischer, A. (1993) *Brit. J. Haematol.* 83, 531-534.

8. Fuhr, G. (1985) Über die rotation dieelektrischer körper in rotierenden feldem, PhD. Dissertation,Humboldt-Universität,Berlin, Chap. 3, 24-53.

9. Gascoyne, P. R. C. *et al. (1994)IEEE. Trans. Ind. Appl.* 30, 829-834.

10. Gascoyne, P. R. C., *et al.* (1992) *Meas. Sci. Technol.* 3, 439-445.

11. Giddings, J.C., (1993) *Science* 260, 1456-1465.

12. Hagedorn, *R. et al.* (1992) *Electrophoresis* 13, 49-54.

13. Holzel, R. *et al.* (1992) *Biochim. Biophyus. Acta* 1101, 195-200.

14. Huang, Y. *et al.* (1992) *Phys. Med. Biol.* 37, 1499-1517.

15. Huang, Y. *et al.* (1993) *Phys. Med. Biol.* 37, 1499-1517.

16. Markx, G. H. *et al.* (1994) *Microbiology* 140, 585-591.

17. Smeland, E.B. *et al.* (1992) *Leukemia,* 6, 845-852.

18. Smeland *et al.,* (1992) *Leukemia,* 6:845-852.

19. Stout, R.D. (1993) *Curr. Opin. Immunol.* 5(3), 398-403.

20. Wang, X.-B. *et al.* (1994) *Biochim. Biophys. Acta* 1193, 330-344.

21. Wang, X.-B. *et al.* (1993) *J. Phys. D: Appl. Phys.* 26, 1278-1285.

**Claims**

1. An apparatus for separation of particulate matter contained in a carrier fluid utilizing dielectrophoresis combined with field flow fractionation, comprising:

   an elongate chamber (10) having an inlet port (15) and an outlet port (30) at respective ends thereof, said elongate chamber (10) having an interior surface and an exterior surface, wherein a velocity profile across said chamber is created in said carrier fluid when flowing from said inlet port (15) to said outlet port (30),
   a plurality of electrode elements configured substantially in a plane to form at least one electrode array (5), said at least one electrode array (5) supported on at least one surface of the elongate chamber (10), and
   an electrical signal generator connected to supply electrical signals to energize said plurality of electrode elements (5),

   wherein said electrode array (5) is arranged to generate a dielectrophoretic force on said matter when energized to create a spatially inhomogeneous electric field, said dielectrophoretic force having components substantially normal to the direction of fluid flow for displacement of said matter in said velocity profile to varying distances from the plane of said electrode array (5), and
   wherein said electrode array (5) is arranged to generate a traveling wave dielectrophoretic force when energized by said electrical signal generator with signals of different phases, said traveling wave dielectrophoretic force having components substantially normal to the direction of fluid flow and parallel to the plane of the electrode array (5) for displacement of said matter in said velocity profile to varying distances along the plane of said electrode array (5).

2. The apparatus according to claim 1, wherein said outlet port (30) is vertically lower than said inlet port (15), thereby permitting separation of said matter by sedimentation.

3. The apparatus according to claim 1, wherein said outlet port (30) comprises a plurality of outlet ports.

4. The apparatus according to claim 1, wherein the chamber (10) includes a top wall, a bottom wall, and two side walls.

5. The apparatus according to claim 1, wherein the plurality of electrode elements (5) are arranged substantially longitudinally along a wall of said elongate chamber (10).

6. The apparatus according to claim 1, wherein the plurality of electrode elements (5) are arranged substantially latitudinally along a wall of said elongate chamber (10).

7. The apparatus according to claim 1, wherein the plurality of electrode elements (5) are arranged along the interior surface of said chamber (10).

8. The apparatus according to claim 1, wherein the plurality of electrode elements (5) are arranged along the exterior surface of said chamber (10).

9. The apparatus according to claim 1, wherein said plurality of electrode elements (5) are configured on a plane substantially parallel to a flow of said fluid traveling through said chamber (10).

10. The apparatus according to claim 1, wherein said outlet port (30) is connected to a fraction collector, in particular wherein said outlet port (30) is connected to collection wells.

11. The apparatus according to claim 1, wherein each of said plurality of electrode elements (5) is individually connected to one of a plurality of electrical conductors electrically connected to said electrical signal generator.

12. The apparatus according to claim 1, wherein the electrode array is configured on a top wall of said elongate chamber (10).

13. The apparatus according to claim 1, wherein the electrode array (5) is configured on a bottom wall of said elongate chamber (10).

14. The apparatus according to claim 12, wherein the inlet port (15) is arranged in close relation to said top wall.

15. The apparatus according to claim 1, comprising a plurality of said electrode arrays (5) arranged on opposing wall surfaces of said chamber (10).

16. The apparatus according to claim 15, wherein said plurality of said electrode arrays are adapted such that each of said electrode elements of an array is not directly opposed by another electrode element (5) on said opposing surface.

17. The apparatus according to claim 1, wherein said electrical signal generator is adapted to vary the magnitude or frequency of said electrical signals.

18. A method of separating particulate matter contained in a carrier fluid using dielectrophoresis combined with field flow fractionation in an apparatus comprising an elongate chamber (10) having an inlet port (15) and an outlet port (30) at respective ends thereof, wherein a velocity profile across said chamber is created in said carrier fluid when flowing from said inlet port (15) to said outlet port (30), said apparatus further comprising a plurality of electrode elements (5) configured substantially in a plane to form at least one electrode array (5), said at least one electrode array (5) supported on at least one surface of the elongate chamber (10) and an electrical signal generator connected to supply electrical signals to energize said plurality of electrode elements (5),
said method comprising:

introducing said matter and said carrier fluid into said elongate chamber (10) through said inlet port (15) to cause fluid flow to said outlet port (30) according to said velocity profile;
creating a spatially inhomogeneous electric field by applying electrical signals to said electrode array (5) to generate a dielectrophoretic force, said dielectrophoretic force having components substantially normal to the direction of fluid flow and causing displacement of said matter in said velocity profile to varying distances from the plane of said electrode array (5), and
creating a traveling wave dielelectrophoretic force by applying electrical signals of different phases to energize said plurality of electrode elements (5), said traveling wave dielelectrophoretic force having components substantially normal to the direction of fluid flow and parallel to the plane of the electrode array (5) for displacement of said matter in said velocity profile to varying distances along the plane of said electrode array (5).

19. The method according to claim 18, wherein said matter is partitioned according to said velocity profile.

20. The method according to claim 18, further comprising collecting said matter at said outlet port (30) at time intervals dependent upon the fluid velocity in said velocity profile.

21. The method according to claim 18, wherein said spatially inhomogeneous electric field is adjusted to cause said matter to be attracted to said plane of said electrode array (5).

22. The method according to claim 21, further comprising holding said matter in close proximity to said plane.

23. The method according to claim 18, wherein said spatially inhomogeneous electric field is adjusted to cause said matter to be repelled from said plane of said electrode array (5).

24. The method according to claim 18, wherein a ratio of electrode element width to electrode element spacing is modified to change levitation heights of said matter.

25. The method according to claim 18, wherein said electrical signals comprises at least three electrical signals having different phases.

26. The method according to claim 18, further comprising balancing the dielectrophoretic force on said matter having components normal to the direction of said carrier fluid traveling through said elongate chamber (10) with a gravitational force on said matter and an hydrodynamic force on said matter to displace said matter to positions within said velocity profile in said carrier fluid.

27. The method according to claim 26, wherein said displaced matter exits from said outlet port (30) at time intervals proportionate to its displacement within said velocity profile.

28. The method according to claim 26, wherein said displaced matter exits from said outlet port (30) at positions laterally displaced from said inlet port (15).

29. The method according to claim 26, wherein said matter is further discriminated by a sedimentation effect.

30. The method according to claim 26, wherein said gravitational force acts on said matter in a direction normal to said velocity profile.

31. The method according to claim 18, wherein the particulate matter comprises a cell, cell aggregate, cell organelle, nucleic acid, bacteria, protozoan, or virus.

32. The method according to claim 18, wherein the particulate matter comprises a mixture of cell types.

33. The method according to claim 32, wherein the mixture of cell types is fetal nucleated red blood cells in a mixture of maternal blood.

34. The method according to claim 32, wherein the mixture of cell types is red blood cells infested with malarial parasites in a mixture with uninfested red blood cells.

35. The method according to claim 32, wherein the mixture of cell types are cancer cells.

36. The method according to claim 32, wherein the mixture of cell types are a mixture of blood cells and breast cancer cells.

37. The method according to claim 18, wherein said particulate matter is solubilized matter.

38. The method according to claim 37, wherein the solubilized matter comprises a molecule, or molecular aggregate.

39. The method according to claim 38, wherein the molecule or molecular aggregate is a protein.


**Patentansprüche**

1. Vorrichtung zum Trennen von in einem Trägerfluid enthaltenen Partikelmaterial unter Verwendung von Dielektrophorese in Kombination mit Feldströmungsfraktionierung, aufweisend:

eine lang.gestreckte Kammer (10) mit einem Einlassanschluss (15) und einem Auslassanschluss (30) an deren entsprechenden Enden, wobei die lang gestreckte Kammer (10) eine Innenoberfläche und eine Außenoberfläche aufweist, wobei ein Geschwindigkeitsprofil quer zu der Kammer in dem Trägerfluid erzeugt wird, wenn es von dem Einlassanschluss (15) zu dem Auslassanschluss (30) strömt,
mehrere Elektrodenelemente, die im Wesentlichen in einer Ebene konfiguriert sind, um wenigstens eine Elektrodenanordnung (5) auszubilden, wobei die wenigsten eine Elektrodenanordnung (5) auf wenigstens einer Oberfläche der länglichen Kammer (10) angeordnet ist, und
einen elektrischen Signalgenerator, der so geschaltet ist, dass er elektrische Signale zum Erregen der mehreren Elektrodenelemente (5) liefert,

wobei die Elektrodenanordnung (5) dafür eingerichtet ist, ein dielektrophoretische Kraft auf dem Material zu generieren, wenn sie erregt ist, um ein räumlich inhomogenes elektrisches Feld zu erzeugen, wobei die dielektrophoretische Kraft Komponenten im Wesentlichen senkrecht zur Richtung der Fluidströmung zur Verschiebung des Materials in dem Geschwindigkeitsprofil zu variierenden Abständen von der Ebene der Elektrodenanordnung (5) aufweist, und
wobei die Elektrodenanordnung (5) so eingerichtet ist, dass sie eine Wanderwellen-Dielektrophoresekraft generiert, wenn sie durch den elektrischen Signalgenerator mit Signalen unterschiedlicher Phasen erregt wird, wobei die Wanderwellen-Dielektrophoresekraft Komponenten im Wesentlichen senkrecht zu der Fluidströmung und parallel zu der Ebene der Elektrodenanordnung (5) zur Verschiebung des Materials in dem Geschwindigkeitsprofil auf variierende Abstände entlang der Elektrodenanordnung (5) aufweist.

2. Vorrichtung nach Anspruch 1, wobei der Auslassanschluss (30) vertikal tiefer als der Einlassanschluss (15) liegt, um **dadurch** eine Trennung des Materials durch Sedimentation zu ermöglichen.

3. Vorrichtung nach Anspruch 1, wobei der Auslassanschluss (30) aus mehreren Auslassanschlüssen besteht.

4. Vorrichtung nach Anspruch 1, wobei die Kammer (10) eine obere Wand, eine untere Wand und zwei Seitenwände enthält.

5. Vorrichtung nach Anspruch 1, wobei die mehreren Elektrodenelemente (5) im Wesentlichen in Längsrichtung entlang einer Wand der lang gestreckten Kammer (10) angeordnet sind.

6. Vorrichtung nach Anspruch 1, wobei die mehreren Elektrodenelemente (5) im Wesentlichen in Breitenrichtung entlang einer Wand der lang gestreckten Kammer (10) angeordnet sind.

7. Vorrichtung nach Anspruch 1, wobei die mehreren Elektrodenelemente (5) entlang der Innenoberfläche der Kammer (10) angeordnet sind.

8. Vorrichtung nach Anspruch 1, wobei die mehreren Elektrodenelemente (5) entlang der Außenoberfläche der Kammer (10) angeordnet sind.

9. Vorrichtung nach Anspruch 1, wobei die mehreren Elektrodenelemente (5) auf einer Ebene im Wesentlichen parallel zu einer Strömung des durch die Kammer (10) wandernden Fluids konfiguriert sind.

10. Vorrichtung nach Anspruch 1, wobei der Auslassanschluss (30) mit einem Fraktionssammler verbunden ist, wobei der Auslassanschluss (30) insbesondere mit Sammelvertiefungen verbunden ist.

11. Vorrichtung nach Anspruch 1, wobei jedes von den mehreren Elektrodenelementen (5) einzeln mit einem von mehreren elektrischen Leitern verbunden ist, die elektrisch mit dem elektrischen Signalgenerator verbunden sind.

12. Vorrichtung nach Anspruch 1, wobei die Elektrodenanordnung auf einer oberen Wand der lang gestreckten Kammer (10) konfiguriert ist.

13. Vorrichtung nach Anspruch 1, wobei die Elektrodenanordnung auf einer unteren Wand der lang gestreckten Kammer (10) konfiguriert ist.

14. Vorrichtung nach Anspruch 12, wobei die Einlassöffnung (15) in enger Beziehung zu der oberen Wand angeordnet ist.

15. Vorrichtung nach Anspruch 1, welche mehrere Elektrodenanordnungen (5) aufweist, die auf gegenüberliegenden Wandoberflächen der Kammer (10) angeordnet sind.

16. Vorrichtung nach Anspruch 15, wobei die mehreren Elektrodenanordnungen so angepasst sind, dass jedes von den Elektrodenelementen einer Anordnung nicht direkt einem anderen Elektrodenelement (5) der gegenüberliegenden Oberfläche gegenüberliegt.

17. Vorrichtung nach Anspruch 1, wobei der elektrische Signalgenerator dafür angepasst ist, die Amplitude oder Frequenz der elektrischen Signale zu verändern.

18. Verfahren zum Trennen von in einem Trägerfluid enthaltenem Partikelmaterial unter Anwendung von Dielektrophorese in Kombination mit Feldströmungsfraktionierung in einer Vorrichtung, die eine lang gestreckte Kammer (10) mit einer Einlassöffnung (15) und einer Auslassöffnung (30) an entsprechenden Enden davon aufweist, wobei ein Geschwindigkeitsprofil quer zu der Kammer in dem Trägerfluid erzeugt wird, wenn es aus dem Einlassanschluss (15) zu dem Auslassanschluss (30) strömt, wobei die Vorrichtung ferner mehrere Elektrodenelemente (5), die im Wesentlichen in einer Ebene konfiguriert sind, um wenigstens eine Elektrodenanordnung (5) auszubilden, wobei die wenigstens eine Elektrodenanordnung (5) auf wenigstens einer Oberfläche der lang gestreckten Kammer (10) gelagert ist und einen elektrischen Signalgenerator aufweist, der so geschaltet ist, dass er elektrische Signale zum Erregen der Elektrodenelemente (5) liefert, wobei das Verfahren die Schritte umfasst
Einführen des Materials und des Trägerfluids in die lang gestreckte Kammer (10) durch den Einlassanschluss (15), um die Fluidströmung durch den Auslassanschluss (30) abhängig von dem Geschwindigkeitsprofil zu veranlassen;

Erzeugen eines räumlich inhomogenen elektrischen Feldes durch Anlegen elektrischer Signale an die Elektrodenanordnung (5), um eine dielektrophoretische Kraft zu generieren, wobei die dielektrische Kraft Komponenten im Wesentlichen senkrecht zu der Fluidströmungsrichtung aufweist und eine Verschiebung des Materials in dem Geschwindigkeitsprofil zu variierenden Abständen von der Ebene der Elektrodenanordnung (5) bewirkt, und

Erzeugen einer Wanderwellen-Dielektrophoresekraft durch Anlegen elektrischer Signale mit unterschiedlichen Phasen, um die mehreren Elektrodenelemente (5) zu erregen, wobei die Wanderwellen-Dielektrophoresekraft Komponenten im Wesentlichen senkrecht zu der Fluidströmungsrichtung und parallel zu der Ebene der Elektrodenanordnung (5) zur Verschiebung des Materials in dem Geschwindigkeitsprofil zu variierenden Abständen entlang der Ebene der Elektrodenanordnung (5) aufweist.

19. Verfahren nach Anspruch 18, wobei das Material gemäß dem Geschwindigkeitsprofil aufgeteilt wird.

20. Verfahren nach Anspruch 18, welches ferner den Schritt der Sammlung des Materials an dem Auslassanschluss (30) an von der Fluidgeschwindigkeit in dem Geschwindigkeitsprofil abhängigen Zeitintervallen aufweist.

21. Verfahren nach Anspruch 18, wobei das räumlich inhomogene elektrische Feld so eingestellt wird, dass es eine Anziehung des Materials zu der Ebene der Elektrodenanordnung bewirkt.

22. Verfahren nach Anspruch 21, ferner mit dem Schritt des Festhaltens des Materials in unmittelbarer Nähe zu der Ebene.

23. Verfahren nach Anspruch 18, wobei das räumlich inhomogene elektrische Feld so eingestellt wird, dass es eine Abstoßung des Materials von der Ebene der Elektrodenanordnung (5) bewirkt.

24. Verfahren nach Anspruch 18, wobei ein Verhältnis der E-lektrodenelementbreite zum Elektrodenelementabstand modifiziert wird, um Anhebungshöhen des Materials zu ändern.

25. Verfahren nach Anspruch 18, wobei die elektrischen Signale aus wenigstens drei elektrischen Signalen mit unterschiedlichen Phasen bestehen.

26. Verfahren nach Anspruch 18, welches ferner den Schritt eines Ausgleichs der dielektrophoretischen Kraft auf das Material mit Komponenten senkrecht zu der Richtung der Trägerfluid? durch die lang gestreckte Kammer (10) mit einer Gravitationskraft auf das Material und einer hydrodynamischen Kraft auf das Material aufweist, um das Material zu Positionen innerhalb des Geschwindigkeitsprofils in dem Trägerfluid zu verschieben.

27. Verfahren nach Anspruch 26, wobei das verschobene Material aus dem Auslassanschluss (30) in Zeitintervallen proportional zu seiner Verschiebung innerhalb des Geschwindigkeitsprofils austritt.

28. Verfahren nach Anspruch 26, wobei das verschobene Material aus dem Auslassanschluss (30) an seitlich von dem Einlassanschluss (50) verschobenen Positionen austritt.

29. Verfahren nach Anspruch 26, wobei das Material ferner durch einen Sedimentierungseffekt getrennt wird.

30. Verfahren nach Anspruch 26, wobei die Gravitationskraft auf das Material in einer Richtung senkrecht zu dem Geschwindigkeitsprofil einwirkt.

31. Verfahren nach Anspruch 18, wobei das Partikelmaterial eine Zelle, Zellansammlung, Zellorganellen, Nukleinsäure, Bakterien, Protozoon oder Virus umfasst.

32. Verfahren nach Anspruch 18, wobei das Partikelmaterial ein Gemisch von Zelltypen umfasst.

33. Verfahren nach Anspruch 32, wobei das Gemisch von Zelltypen fötale kernhaltige rote Blutzellen in einem Gemisch aus mütterlichem Blut sind.

34. Verfahren nach Anspruch 32, wobei das Gemisch der Zelltypen mit Malariaparasiten befallene rote Blutzellen in einer Mischung mit nicht befallenen roten Blutzellen ist.

35. Verfahren nach Anspruch 32, wobei das Gemisch des Zelltypen Krebszellen sind.

**36.** Verfahren nach Anspruch 32, wobei das Gemisch der Zelltypen ein Gemisch aus Blutzellen und Brustkrebszellen ist.

**37.** Verfahren nach Anspruch 18, wobei das Partikelmaterial gelöstes Material ist.

**38.** Verfahren nach Anspruch 37, wobei das gelöste Material ein Molekül oder Molekülaggregat ist.

**39.** Verfahren nach Anspruch 38, wobei das Molekül oder Molekülaggregat ein Protein ist.

**Revendications**

**1.** Appareil pour séparer la matière particulaire contenue dans un fluide porteur utilisant une diélectrophorèse combinée avec un fractionnement d'écoulement de champ, comprenant :

une chambre allongée (10) ayant un port d'entrée (15) et un port de sortie (30) à ses extrémités respectives, ladite chambre allongée (10) ayant une surface intérieure et une surface extérieure, dans laquelle on crée dans ledit fluide porteur un profil de vitesse à travers ladite chambre lors de l'écoulement depuis ledit port d'entrée (15) vers ledit port de sortie (30),
une pluralité d'éléments d'électrodes configurés sensiblement dans un plan pour former au moins une matrice d'électrodes (5), ladite au moins une matrice d'électrodes (5) étant supportée sur au moins une surface de la chambre allongée (10), et
un générateur de signaux électriques connecté pour fournir des signaux électriques pour exciter ladite pluralité d'éléments d'électrodes (5),

dans lequel ladite matrice d'électrodes (5) est agencée de manière à générer une force diélectrophorétique sur ladite matière lorsqu'elle est excitée pour créer un champ électrique spatialement inhomogène, ladite force diélectrophorétique ayant des composantes sensiblement normales par rapport à la direction d'écoulement du fluide pour déplacer ladite matière dans ledit profil de vitesse pour faire varier les distances par rapport au plan de ladite matrice d'électrodes (5), et

dans lequel ladite matrice d'électrodes (5) est agencée pour générer une force diélectrophorétique d'ondes progressives lorsqu'elle est excitée par ledit générateur de signaux électriques avec des signaux de phases différentes, ladite force diélectrophorétique d'ondes progressives ayant des composantes sensiblement normales par rapport à la direction d'écoulement du fluide et parallèles au plan de la matrice d'électrodes (5) pour déplacer ladite matière dans ledit profil de vitesse pour faire varier les distances le long du plan de ladite matrice d'électrodes (5).

**2.** Appareil selon la revendication 1, dans lequel ledit port de sortie (30) est verticalement plus bas que ledit port d'entrée (15), de façon à permettre la séparation de ladite matière par sédimentation.

**3.** Appareil selon la revendication 1, dans lequel ledit port de sortie (30) comprend une pluralité de ports de sortie.

**4.** Appareil selon la revendication 1, dans lequel la chambre (10) comporte une paroi supérieure, une paroi inférieure et deux parois latérales.

**5.** Appareil selon la revendication 1, dans lequel la pluralité d'éléments d'électrodes (5) sont agencés sensiblement longitudinalement le long d'une paroi de ladite chambre allongée (10).

**6.** Appareil selon la revendication 1, dans lequel la pluralité d'éléments d'électrodes (5) sont agencés sensiblement latéralement le long d'une paroi de ladite chambre allongée (10).

**7.** Appareil selon la revendication 1, dans lequel la pluralité d'éléments d'électrodes (5) sont agencés le long de la surface intérieure de ladite chambre (10).

**8.** Appareil selon la revendication 1, dans lequel la pluralité d'éléments d'électrodes (5) sont agencés le long de la surface extérieure de ladite chambre (10).

**9.** Appareil selon la revendication 1, dans lequel ladite pluralité d'éléments d'électrodes (5) sont configurés sur un plan sensiblement parallèle à l'écoulement dudit fluide traversant ladite chambre (10).

10. Appareil selon la revendication 1, dans lequel ledit port de sortie (30) est relié à un collecteur de fraction, en particulier dans lequel ledit port de sortie (30) est relié à des puits de collecte.

11. Appareil selon la revendication 1, dans lequel chaque élément de ladite pluralité d'éléments d'électrodes (5) est connecté à un conducteur parmi une pluralité de conducteurs électriques électriquement connectés audit générateur de signaux électriques.

12. Appareil selon la revendication 1, dans lequel la matrice d'électrodes est configurée sur la paroi supérieure de ladite chambre allongée (10).

13. Appareil selon la revendication 1, dans lequel la matrice d'électrodes (5) est configurée sur la paroi inférieure de ladite chambre allongée (10).

14. Appareil selon la revendication 12, dans lequel le port d'entrée (15) est agencé en relation proche avec ladite paroi supérieure.

15. Appareil selon la revendication 1, comprenant une pluralité desdites matrices d'électrodes (5) agencées sur des surfaces de parois opposées de ladite chambre (10).

16. Appareil selon la revendication 15, dans lequel ladite pluralité desdites matrice d'électrodes sont adaptées de façon que chaque élément desdits éléments d'électrodes d'une matrice ne soit pas directement opposé à un autre élément d'électrode (5) sur ladite surface opposée.

17. Appareil selon la revendication 1, dans lequel ledit générateur de signaux électriques est adapté à faire varier l'amplitude ou la fréquence desdits signaux électriques.

18. Procédé pour séparer la matière particulaire contenue dans un fluide porteur utilisant une diélectrophorèse combinée avec un fractionnement d'écoulement de champ dans un appareil comprenant une chambre allongée (10) ayant un port d'entrée (15) et un port de sortie (30) à ses extrémités respectives, dans laquelle on crée un profil de vitesse à travers ladite chambre dans ledit fluide porteur lors de l'écoulement depuis ledit port d'entrée (15) vers ledit port de sortie (30), ledit appareil comprenant en outre une pluralité d'éléments d'électrodes (5) configurés sensiblement dans un plan pour former au moins une matrice d'électrodes (5), ladite au moins une matrice d'électrodes (5) étant supportée sur au moins une surface de la chambre allongée (10) et un générateur de signaux électriques connecté pour fournir des signaux électriques pour exciter ladite pluralité d'éléments d'électrodes (5), ledit procédé comprenant :

l'introduction de ladite matière et dudit fluide porteur dans ladite chambre allongée (10) à travers ledit port d'entrée (15) pour faire s'écouler le fluide vers ledit port de sortie (30) en fonction dudit profil de vitesse ; la création d'un champ électrique spatialement inhomogène en appliquant des signaux électriques à ladite matrice d'électrodes (5) pour générer une force diélectrophorétique, ladite force diélectrophorétique ayant des composantes sensiblement normales par rapport à la direction d'écoulement du fluide et pour déplacer ladite matière dans ledit profil de vitesse pour faire varier les distances par rapport au plan de ladite matrice d'électrodes (5), et la création d'une force diélectrophorétique d'ondes progressives en appliquant des signaux électriques de phases différentes pour exciter ladite pluralité d'éléments d'électrodes (5), ladite force diélectrophorétique d'ondes progressives ayant des composantes sensiblement normales par rapport à la direction d'écoulement du fluide et parallèles au plan de la matrice d'électrodes (5) pour déplacer ladite matière dans ledit profil de vitesse pour faire varier les distances le long du plan de ladite matrice d'électrodes (5).

19. Procédé selon la revendication 18, dans lequel ladite matière est compartimentée en fonction dudit profil de vitesse.

20. Procédé selon la revendication 18, comprenant en outre la collecte de ladite matière au niveau dudit port de sortie (30) par intervalles de temps dépendant de la vitesse du fluide dans ledit profil de vitesse.

21. Procédé selon la revendication 18, dans lequel ledit champ électrique spatialement inhomogène est réglé de manière à faire attirer ladite matière vers ledit plan de ladite matrice d'électrodes (5).

22. Procédé selon la revendication 21, comprenant en outre le maintien de ladite matière à proximité immédiate dudit plan.

23. Procédé selon la revendication 18, dans lequel ledit champ électrique spatialement inhomogène est réglé de manière à faire repousser ladite matière dudit plan de ladite matrice d'électrodes (5).

24. Procédé selon la revendication 18, dans lequel on modifie le rapport entre la largeur des éléments d'électrodes et l'espacement entre les éléments d'électrodes pour faire varier les hauteurs de lévitation de ladite matière.

25. Procédé selon la revendication 18, dans lequel lesdits signaux électriques comprennent au moins trois signaux électriques ayant des phases différentes.

26. Procédé selon la revendication 18, comprenant en outre l'équilibrage de la force diélectrophorétique sur ladite matière ayant des composantes normales par rapport à la direction dudit fluide porteur traversant ladite chambre allongée (10) avec une force gravitationnelle sur ladite matière et une force hydrodynamique sur ladite matière pour amener ladite matière dans des positions à l'intérieur dudit profil de vitesse dans ledit fluide porteur.

27. Procédé selon la revendication 26, dans lequel ladite matière déplacée sort dudit port de sortie (30) par intervalles de temps proportionnels à son déplacement dans ledit profil de vitesse.

28. Procédé selon la revendication 26, dans lequel ladite matière déplacée sort dudit port de sortie (30) dans des positions déplacées latéralement dudit port d'entrée (15).

29. Procédé selon la revendication 26, dans lequel ladite matière est en outre, séparée par un effet de sédimentation.

30. Procédé selon la revendication 26, dans lequel ladite force de gravitationnelle agit sur ladite matière dans une direction normale audit profil de vitesse.

31. Procédé selon la revendication 18, dans lequel la matière particulaire comprend une cellule, un agrégat de cellules, un organite de cellules, un acide nucléique, des bactéries, des protozoaires ou un virus.

32. Procédé selon la revendication 18, dans lequel la matière particulaire comprend un mélange de types de cellules.

33. Procédé selon la revendication 32, dans lequel le mélange de types de cellules comprend des globules rouges foetaux nucléés dans un mélange de sang maternel.

34. Procédé selon la revendication 32, dans lequel le mélange de types de cellules comprend des globules rouges infectés de parasites paludéens dans un mélange avec des globules rouges non infectés.

35. Procédé selon la revendication 32, dans lequel le mélange de types de cellules comprend des cellules cancéreuses.

36. Procédé selon la revendication 32, dans lequel le mélange de types de cellules comprend un mélange de cellules sanguines et des cellules de cancer du sein.

37. Procédé selon la revendication 18, dans lequel ladite matière particulaire est une matière solubilisée.

38. Procédé selon la revendication 37, dans lequel la matière solubilisée comprend une molécule ou un agrégat moléculaire.

39. Procédé selon la revendication 38, dans lequel la molécule ou l'agrégat moléculaire est une protéine.

FIG. 1A

FIG. 1B

FIG. 1C

FIG. 2A

EP 0 885 055 B1

FIG. 2B

FIG. 2C

Time (Min)
FIG. 3B

Cell count (View area-1280 um*960 um)

FIG. 3C

FIG. 4A

FIG. 4B

FIG. 5A

FIG. 5B

FIG. 5C

FIG. 5D

EP 0 885 055 B1